# EUROPÄISCHE PATENTANMELDUNG

(11) **EP 4 850 936 A1**
(43) Veröffentlichungstag der Anmeldung: **09.12.2026**
(21) Anmeldenummer: 25180231.0
(22) Anmeldetag: 02.06.2025
(51) Int. Cl.: B60H 1/00, G08G 1/0967

(54) **LUFTGÜTEREGELUNG IN EINEM KRAFTFAHRZEUG**

(71) Anmelder: MAGNA STEYR Fahrzeugtechnik GmbH & Co KG, 8041 Graz (AT)
(72) Erfinder: GEIER, Bertram, 8020 Graz (AT); HOFSTETTER, Martin, 8010 Graz (AT); STUERMER, Michael, 8020 Graz (AT)
(74) Vertreter: Augspurger Tesch Friderichs

(57) **Zusammenfassung**

Ein Verfahren zur Luftgüteregelung in einem Innenraum eines Kraftfahrzeugs, wobei durch eine Umluftklappensteuerung (1) des Kraftfahrzeugs zumindest eine Umluftklappe wahlweise öffenbar und schließbar ist, wobei ein Außenluft-Qualitätsüberwachungsmodul (2) dazu eingerichtet ist, auf Basis von Umweltdaten das Vorliegen zumindest eines von mehreren vordefinierten unterschiedlichen Fahrszenarien (5 - 13) zu erkennen, wobei ein Außenluft-Qualifizierungsmodul (3) dazu eingerichtet ist, für das erkannte vorliegende mindestens eine Fahrszenario (5 - 13) den Einfluss auf die Luftgüte im Außenraum des Kraftfahrzeugs zu bewerten, wobei ein Innenluft-Qualitätsüberwachungsmodul (4) abhängig vom Ergebnis des Außenluft-Qualifizierungsmoduls (3) der Umluftklappensteuerung (1) des Kraftfahrzeugs Bedingungsdaten (14) zur Verfügung stellt, beispielsweise eine Verhinderung (15) einer Umluftklappenöffnung und/oder eine Bestätigung (16) einer Umluftklappenöffnung und/oder eine Luftqualitätsbewertung (17), so dass die Umluftklappensteuerung (1) abhängig von den Bedingungsdaten (14) einen Befehl zum Öffnen oder Schließen der Umluftklappe sendet oder nicht sendet.

## Beschreibung

### Gebiet der Erfindung

Die vorliegende Erfindung betrifft ein Verfahren zur Luftgüteregelung in einem Innenraum eines Kraftfahrzeugs und ein Kraftfahrzeug umfassend eine oder mehrere Steuereinheiten, wobei die eine oder die mehreren Steuereinheiten dazu eingerichtet sind, ein solches Verfahren zur Luftgüteregelung auszuführen.

### Stand der Technik

Es ist bekannt, dass die Luftgüte in einem Innenraum eines Kraftfahrzeugs mit Hilfe einer Umluftklappensteuerung geregelt werden kann, durch welche zumindest eine Umluftklappe wahlweise öffenbar und schließbar ist. Manchmal sind solche Umluftklappen auch in einem Teilumluftbetrieb in eine teilweise offene und teilweise geschlossene Stellung bringbar, beispielsweise zu 30 % offen, so dass die Umluftklappe zu 30 % für eine Frischluftzufuhr von außerhalb des Kraftfahrzeuges geöffnet ist und zu 70 % die Luft des Fahrgastraumes rezirkuliert wird.

Die Umluftsteuerung von Fahrzeugen basiert derzeit auf manuellen oder einfachen automatisierten Steuerungssystemen, die primär auf der Basis allgemeiner Umweltbedingungen oder statischer Zeitpläne arbeiten.

Die bisherigen Systeme zur Steuerung der Umluftklappe reagieren entweder nur zeitverzögert auf Umweltbedingungen oder arbeiten mit festen Einstellungen, die nicht auf spezifische Situationen angepasst sind. Dies führt unter anderem zu den folgenden Nachteilen:
- Unzureichender Schutz vor Schadstoffen: Aktuelle Systeme reagieren nicht rechtzeitig auf Schadstoffquellen, was zu einer erhöhten Schadstoffbelastung im Fahrzeuginnenraum führen kann.
- Erhöhter Verschleiß mechanischer Komponenten: Häufiges und unnötiges Öffnen und Schließen der Umluftklappe kann zu einem erhöhten Verschleiß ihres Stellmotors führen.
- Geringere Effizienz der Klimaanlage: Fehlende situative Anpassung der Umluftsteuerung kann die Effizienz der Klimaanlage beeinträchtigen und den Komfort der Fahrzeugpassagiere reduzieren.

An sich bekannt ist auch die Überwachung sowie Steuerung der Kohlenstoffdioxid (CO2)-Konzentration in Fahrzeuginnenräumen. Die CO2-Konzentration in Fahrgastzellen wird entweder durch vereinfachte, zeitgesteuerte Systeme realisiert oder durch physische CO2-Sensoren überwacht und gesteuert. Diese Sensoren sind in moderne Klimasysteme integriert und ermöglichen die automatische Steuerung der Umluftklappe, um die Luftqualität im Fahrgastraum zu regulieren.

Folgende Nachteile haben die aus dem Stand der Technik bekannten Steuerungen der Kohlenstoffdioxid (CO2)-Konzentration in Fahrzeuginnenräumen:
- Hohe Kosten: CO2-Sensoren erhöhen die Gesamtkosten des Fahrzeugs durch Material- und Integrationskosten.
- Erhöhte Komplexität: Die Integration von Sensoren erfordert zusätzliche Hard- und Software, was die Komplexität des Klimasystems erhöht.
- Wartung und Verschleiß: Sensoren sind anfällig für Verschleiß und Ausfälle, was zu höheren Wartungskosten und potentiellen Funktionseinschränkungen führt.
- Langsame Reaktionszeit: Die Messung der CO2-Konzentration durch Sensoren kann Verzögerungen in der Regelung verursachen.

### Zusammenfassung der Erfindung

Es ist eine Aufgabe der Erfindung, ein Verfahren zur Luftgüteregelung in einem Innenraum eines Kraftfahrzeugs in dieser Hinsicht zu verbessern und insbesondere ein Verfahren zur Luftgüteregelung in einem Innenraum eines Kraftfahrzeugs anzugeben, das kostengünstig realisierbar ist und zu einer guten Luftqualität, insbesondere einer geringen Schadstoffbelastung und/oder geringen Kohlendioxidkonzentration beiträgt. Ebenso ist es eine Aufgabe, ein Kraftfahrzeug umfassend eine oder mehrere Steuereinheiten anzugeben, wobei die eine oder die mehreren Steuereinheiten dazu eingerichtet sind, ein solches verbessertes Verfahren zur Luftgüteregelung auszuführen.

Die Lösung der Aufgabe erfolgt durch ein Verfahren zur Luftgüteregelung in einem Innenraum eines Kraftfahrzeugs, wobei durch eine Umluftklappensteuerung des Kraftfahrzeugs zumindest eine Umluftklappe wahlweise öffenbar und schließbar ist, wobei ein Außenluft-Qualitätsüberwachungsmodul dazu eingerichtet ist, auf Basis von Umwelt- und/oder anderen Fahrzeugdaten das Vorliegen zumindest eines von mehreren vordefinierten unterschiedlichen Fahrszenarien zu erkennen, wobei ein Außenluft-Qualifizierungsmodul dazu eingerichtet ist, für das erkannte vorliegende mindestens eine Fahrszenario den Einfluss auf die Luftgüte im Außenraum des Kraftfahrzeugs zu bewerten, wobei ein Innenluft-Qualitätsüberwachungsmodul abhängig vom Ergebnis des Außenluft-Qualifizierungsmoduls der Umluftklappensteuerung des Kraftfahrzeugs Bedingungsdaten zur Verfügung stellt, beispielsweise eine Verhinderung einer Umluftklappenöffnung und/oder eine Bestätigung einer Umluftklappenöffnung und/oder eine Luftqualitätsbewertung, so dass die Umluftklappensteuerung abhängig von den Bedingungsdaten einen Befehl zum Öffnen oder Schließen der Umluftklappe sendet oder nicht sendet.

Erfindungsgemäß wird eine Umluftklappe von einer Umluftklappensteuerung gesteuert, insbesondere geöffnet oder geschlossen oder teilweise geöffnet. Ein Innenluft-Qualitätsüberwachungsmodul (Interior air quality monitoring) kann als Ausgangsdaten Daten für die Umluftklappensteuerung bereitstellen, die die Tätigkeit der Umluftklappensteuerung und somit das Öffnen und/oder Schließen der Umluftklappe beeinflussen, nämlich die Bedingungsdaten. Beispielsweise kann das Öffnen der Umluftklappe durch das Innenluft-Qualitätsüberwachungsmodul verhindert, also unterbunden werden, oder auch bestätigt werden, dass das Öffnen möglich ist. Es kann auch eine Qualitätsinformation über die Luft in der Umwelt, nämlich eine Luftqualitätsbewertung, für die Umluftklappensteuerung bereitgestellt werden.

Diese Bedingungsdaten beruhen dabei jeweils auf Daten eines Außenluft-Qualitätsüberwachungsmoduls (Exterior air quality monitoring), das für die Überwachung und/oder Bewertung der Luft im Außenbereich nicht Luftgüte-Sensoren verwendet, sondern eine Erkennung verschiedener vordefinierter Szenarien im Umfeld des Kraftfahrzeugs. Die Erkennung und/oder Bewertung der Szenarien kann mittels KI-Software (Künstliche Intelligenz) erfolgen.

Die Erfindung stellt eine Methode zur adaptiven und intelligenten Steuerung der Umluftklappe dar, die auf der Basis von Umwelt- und/oder Fahrzeugdaten, bevorzugt auf der Basis von CAN-Datenbussignalen, Videobilddaten, und ergänzenden Informationen, insbesondere aus dem Internet, potentielle Schadstoffquellen erkennt und die Luftzufuhr situativ anpasst. Bevorzugt stellt eine erfindungsgemäße Methode auch eine Methode zur simulationsbasierten Regelung der CO2-Konzentration in Fahrzeugkabinen dar, die durch Auswahl adäquater CO2-Kalibrationskurven basierend auf Fahrzeuginnenraumparametern erfolgt.

Die Erfindung kann, je nach Ausführungsform, zu folgenden Vorteilen beitragen:
- Verzicht auf einen Luftgütesensor (Air quality sensor, AQS): Die Erfindung kommt ohne einen außen angebrachten AQS aus, wodurch Kosten, Kalibrieraufwand und mögliche Alterungseffekte des Sensors entfallen.
- Gezielte Reduzierung der Schadstoffbelastung: Die Erfindung nutzt spezifische CAN-Datenbussignale, um situativ auf potentielle Schadstoffquellen zu reagieren. Dadurch wird der Eintrag schädlicher Außenluft in den Innenraum minimiert.
- Verbesserte Lebensdauer der mechanischen Komponenten: Durch die begrenzte und situativ angepasste Betätigung der Umluftklappe wird der Verschleiß ihres Stellmotors reduziert. Dies erhöht die Lebensdauer und Zuverlässigkeit des Systems.
- Erhöhter Komfort und gesteigerte Sicherheit: Die exakte Steuerung der Luftzufuhr trägt zu einem angenehmeren und gesünderen Innenraumklima bei und verbessert die Sicherheit der Passagiere, indem die Belastung durch Schadstoffe minimiert wird.

Es können auch spezifische Daten von Fahrzeugsensoren zur präzisen sowie proaktiven Detektion und Reaktion auf unmittelbare Umweltbedingungen, wie z. B. Tunnelbauwerke, Unterführungen, Baustellen etc genutzt werden. Die Controller Area Network (CAN)-Datenbussignale und Fahrerassistenzsysteme (Advanced Driver-Assistance Systems, ADAS) stellen etablierte Technologien dar, die zur Erfassung der Umgebung genutzt werden. Diese Signale können nun auch umfassend zur Steuerung der Innenraumluftqualität verwendet werden.

In Bezug auf die Steuerung der Kohlenstoffdioxid (CO2)-Konzentration in Fahrzeuginnenräumen kann die Erfindung, je nach Ausführungsform, zu folgenden Vorteilen beitragen:
- Kosteneinsparung: Durch den Verzicht auf CO2-Sensoren werden Material- und Integrationskosten reduziert.
- Erhöhte Zuverlässigkeit: Die simulationsbasierte Methode vermeidet den Verschleiß von Hardware und potentielle Sensorfehler, wodurch die Zuverlässigkeit des Systems steigt.
- Einfache Implementierung: Die Nutzung bestehender Fahrzeuginnenraumparameter zur Simulation erfordert keine zusätzlichen Hardwarekomponenten, was die Systemarchitektur vereinfacht.
- Schnellere Reaktionszeit: Die Simulation ermöglicht eine proaktive Anpassung der Klima- und Lüftungssteuerung basierend auf vordefinierten Szenarien, was die Regelungszeit verkürzt.

Es wird somit durch die Erfindung eine AQS-unabhängige sowie prädiktive Umluftsteuerung ermöglicht. Die Erfindung zielt darauf ab, eine präzise Steuerung der Umluftklappe in Fahrzeugen darzustellen, die basierend auf der Detektion von potentiellen Schadstoffquellen, z.B. Tunnelbauwerke, Unterführungen oder Baustellen, die Luftzufuhr in den Fahrzeuginnenraum situativ anpasst. Damit wird die Luftqualität im Innenraum verbessert und der Verschleiß der mechanischen Komponenten minimiert.

Je nach Ausführungsform wird durch die Erfindung auch eine kosteneffiziente und zuverlässige Methode zur Regelung der CO2-Konzentration im Fahrgastraum ermöglicht. Diese Regelung basiert auf einer Simulation der CO2-Werte und verzichtet somit auf den Einsatz physischer Sensoren.

Ein erfindungsgemäßes Verfahren sowie die genannten "Module" wird durch eine Software, bevorzugt durch ein oder mehrere Computerprogramme, die bevorzugt auf einer oder mehreren Steuereinheiten eines Kraftfahrzeugs ausgeführt werden, ausgeführt.

Weiterbildungen der Erfindung sind in den abhängigen Ansprüchen, der Beschreibung sowie den beigefügten Zeichnungen angegeben.

Vorzugsweise ist das Außenluft-Qualitätsüberwachungsmodul dazu eingerichtet, auf Basis von Umwelt- und/oder Fahrzeugdaten mittels KI-Software das Vorliegen zumindest eines von mehreren vordefinierten unterschiedlichen Fahrszenarien zu erkennen und/oder ist das Außenluft-Qualifizierungsmodul (Exterior air quality qualifier) dazu eingerichtet, für das erkannte vorliegende mindestens eine Fahrszenario mittels KI-Software den Einfluss auf die Luftgüte im Außenraum des Kraftfahrzeugs zu bewerten.

Bevorzugt umfassen die vordefinierten unterschiedlichen Fahrszenarien, die von dem Außenluft-Qualitätsüberwachungsmodul auf Basis von Umwelt- und/oder Fahrzeugdaten erkannt werden können: Tunnelbauwerke und/oder Unterführungen und/oder Baustellenbereiche und/oder Verkehrsstau und/oder Mautstellen und/oder Auffahrten von Autobahnen und/oder Abfahrten von Autobahnen und/oder Objekterkennung, insbesondere von Lastkraftwagen und/oder von Motorrädern und/oder Ampelanlagen und/oder Kreuzungsbereiche und/oder Kreisverkehre und/oder Tiefgaragen.

Bevorzugt wird das Ergebnis des Außenluft-Qualifizierungsmoduls an die Umluftklappensteuerung des Kraftfahrzeugs übergeben, so dass die Bedingungsdaten der Umluftklappensteuerung des Kraftfahrzeugs zur Verfügung gestellt werden.

Bevorzugt umfasst das Innenluft-Qualitätsüberwachungsmodul ein Kohlendioxidkonzentrations-Simulationsmodul. Vorzugsweise wird durch das Kohlendioxidkonzentrations-Simulationsmodul auch eine Kohlendioxidkonzentration der Umluftklappensteuerung zur Verfügung gestellt.

Bevorzugt wird die aktuelle) Position der Umluftklappe im Innenluft-Qualitätsüberwachungsmodul am Ausgang der Umluftklappensteuerung an die CO2-Simulation, also das Kohlendioxidkonzentrations-Simulationsmodul, rückgekoppelt, so dass ein geschossener Regelkreis ermöglicht wird.

Vorzugsweise ist das Außenluft-Qualifizierungsmodul dazu eingerichtet, zusätzlich zum Einfluss des erkannten vorliegenden mindestens einen Fahrszenarios, den Einfluss von allgemeinen Umweltbedingungen auf die Luftgüte im Außenraum des Kraftfahrzeugs zu bewerten.

Das Außenluft-Qualifizierungsmodul ist bevorzugt dazu eingerichtet, den Einfluss von allgemeinen Umweltbedingungen auf die Luftgüte im Außenraum des Kraftfahrzeugs mittels KI-Software zu bewerten.

Bevorzugt umfasst das Innenluft-Qualitätsüberwachungsmodul ein Teilumluftbetriebsmodul, zur Steuerung eines Teilumluftbetriebs des Kraftfahrzeus mit teilweise offener und teilweise geschlossener Umluftklappe, wobei die Bedingungsdaten, abhängig vom Ergebnis des Außenluft-Qualifizierungsmoduls, zumindest teilweise durch das Teilumluftbetriebsmodul der Umluftklappensteuerung zur Verfügung gestellt werden.

Vorzugsweise ist das Außenluft-Qualitätsüberwachungsmodul dazu eingerichtet, zusätzlich zur Berücksichtigung zumindest eines von mehreren vordefinierten unterschiedlichen Fahrszenarien, zusätzliche Luftqualitätsressourcen im Internet und/oder auf zumindest einem Kraftfahrzeug-externen Server auszuwerten, so dass die Bedingungsdaten abhängig vom Ergebnis der zusätzlichen Luftqualitätsressourcen im Internet und/oder von zumindest einem Kraftfahrzeug-externen Server zur Verfügung gestellt werden.

Das Außenluft-Qualitätsüberwachungsmodul ist vorzugsweise dazu eingerichtet, zusätzlich Navigationsdaten auszuwerten, so dass die Bedingungsdaten abhängig vom Ergebnis der Navigationsdaten zur Verfügung gestellt werden.

Bevorzugt ist das Außenluft-Qualitätsüberwachungsmodul dazu eingerichtet, zusätzlich Benutzereingaben auszuwerten, insbesondere von einem Benutzer des Kraftfahrzeugs, bevorzugt des Fahrers des Kraftfahrzeugs, so dass die Bedingungsdaten abhängig vom Ergebnis der Benutzereingaben zur Verfügung gestellt werden.

Das Innenluft-Qualitätsüberwachungsmodul umfasst bevorzugt ein Kohlendioxidsimulationsmodul, so dass das Innenluft-Qualitätsüberwachungsmodul abhängig vom Ergebnis des Außenluft-Qualifizierungsmoduls und vom Ergebnis des Kohlendioxidsimulationsmoduls der Umluftklappensteuerung des Kraftfahrzeugs Bedingungsdaten und/ oder eine Kohlendioxidkonzentration zur Verfügung stellt.

Ein erfindungsgemäßes Kraftfahrzeug umfasst eine oder mehrere Steuereinheiten, wobei die eine oder die mehreren Steuereinheiten dazu eingerichtet sind, ein Verfahren wie zuvor beschrieben auszuführen, so dass durch eine Umluftklappensteuerung des Kraftfahrzeugs zumindest eine Umluftklappe des Kraftfahrzeugs wahlweise öffenbar und schließbar, bevorzugt auch teilweise öffenbar, ist.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Verfahrens zur Luftgüteregelung in einem Innenraum eines Kraftfahrzeugs.
- Fig. 2: ist eine schematische Darstellung eines Flussdiagramms zur Detektion von Tunnelbauwerken mittels Fahrzeugdatenbussignalen in einem erfindungsgemäßen Verfahren.
- Fig. 3: ist eine schematische Darstellung eines Flussdiagramms zur Detektion von Unterführungen bzw. - querungen mittels Fahrzeugdatenbussignalen und KI in einem erfindungsgemäßen Verfahren.
- Fig. 4: ist eine schematische Darstellung eines Flussdiagramms zur Detektion von Baustellen mittels KI und Fahrzeugdatenbussignalen in einem erfindungsgemäßen Verfahren.
- Fig. 5: ist eine schematische Darstellung eines Flussdiagramms zur Detektion eines Verkehrsstaus mittels Fahrzeugdatenbussignalen, Kartenmetadaten und KI in einem erfindungsgemäßen Verfahren.
- Fig. 6: ist eine schematische Darstellung eines Flussdiagramms zur Detektion von Autobahnauf- bzw. - abfahrten, Beschleunigungs- und Verzögerungsstreifen sowie von Mautstellen mittels Fahrzeugdatenbussignalen in einem erfindungsgemäßen Verfahren.
- Fig. 7: ist eine schematische Darstellung eines Flussdiagramms zur Detektion von Lkws und Motorrädern mittels Fahrzeugdatenbussignalen in einem erfindungsgemäßen Verfahren.
- Fig. 8: ist eine schematische Darstellung eines Flussdiagramms zur Detektion von Pkws und Lkws mittels Fahrzeugdatenbussignal und KI in einem erfindungsgemäßen Verfahren.
- Fig. 9: ist eine schematische Darstellung eines Flussdiagramms zur Befragung der KI über vorausfahrende Fahrzeuge in einem erfindungsgemäßen Verfahren.
- Fig. 10: ist eine schematische Darstellung eines Flussdiagramms zur Detektion von Ampelanlagen und Kreu- zungsbereichen mittels Fahrzeugdatenbussignalen und Kartenmetadaten in einem erfindungsgemäßen Verfahren.
- Fig. 11: ist eine schematische Darstellung eines Flussdiagramms zur Detektion von Kreisverkehren mithilfe des Fahrzeugdatenbusses in einem erfindungsgemäßen Verfahren.
- Fig. 12: ist eine schematische Darstellung eines Flussdiagramms zur Detektion von Tiefgaragen mittels Fahrzeugdatenbussignalen in einem erfindungsgemäßen Verfahren.
- Fig. 13: ist eine schematische Darstellung eines Flussdiagramms zur Detektion von Inversionswetterlagen und Hausbrand mittels KI in einem erfindungsgemäßen Verfahren.
- Fig. 14: ist eine schematische Darstellung eines Mechanismus der prädiktiven KI-gestützten Umluftsteuerung am Beispiel kartografierter Schadstoffquellen in einem erfindungsgemäßen Verfahren.
- Fig. 15: ist eine schematische Darstellung eines Mechanismus der prädiktiven KI-gestützten Umluftsteuerung im Detail in einem erfindungsgemäßen Verfahren.
- Fig. 16: ist eine schematische Darstellung einer Einbindung von Flottendaten zur Umluftsteuerung in einem erfindungsgemäßen Verfahren.
- Fig. 17: ist eine schematische Darstellung zur Auswahl von CO2-Kalibrationskurven und anschließenden Simulation in der Fahrzeugkabine in einem erfindungsgemäßen Verfahren.
- Fig. 18: ist eine schematische Darstellung eines zeitlichen Verlaufs der CO2-Konzentration in einer Fahrzeugkabine als Beispiel für eine CO2-Kalibrationskurve in einem erfindungsgemäßen Verfahren.
- Fig. 19: ist eine schematische Darstellung eines Verfahrens zur Regelung der CO2-Konzentration im Fahrgastraum in einem erfindungsgemäßen Verfahren.

### Detaillierte Beschreibung der Erfindung

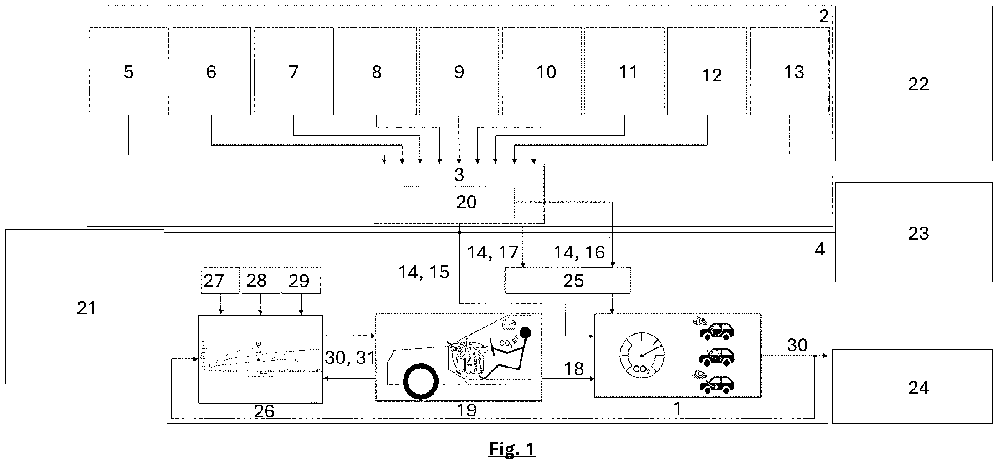

In Fig. 1 ist ein erfindungsgemäßes Verfahren in einer Übersicht dargestellt.

Die vorliegende Erfindung beschreibt ein Verfahren, das die Innenraumluftqualität von Fahrzeugen durch eine intelligente Regelung der Umluftklappe sowie bevorzugt auch der Lüftergeschwindigkeit optimiert. Passagiere begegnen aufgrund verschiedener Situationen im Straßenverkehr Quellen unterschiedlichster Schadstoffe und unangenehmer Gerüche. Fig. 1 fasst die häufigsten luftgütebeeinträchtigenden Fahrszenarien 5 - 13 in einem Block bzw. Modul Außenluft-Qualitätsüberwachungsmodul 2 (Exterior air quality monitoring) zusammen. Dieser Bereich detektiert Umweltbedingungen, die zu einer Verschlechterung der umliegenden Luftqualität führen, wie beispielsweise Tunnelfahrten 5, Unterführungen 6, Baustellen 7, Verkehrsstau 8, Autobahnauf- und -abfahrten und Mautstellen 9, Nutzfahrzeuge sowie einspurige Kraftfahrzeuge 10, Kreuzungsbereiche 11, Kreisverkehre 12 und Tiefgaragen 13. In den folgenden Abschnitten werden die einzelnen Detektionsmechanismen im Detail erklärt, um ihre Funktionsweise nachvollziehen zu können. Danach wird die Zusammenführung und Bewertung der Subsystemausgänge im Außenluft-Qualifizierungsmodul 3 beschrieben. Schließlich wird die Verwendung von GPS-Metadaten für eine effiziente Umluftregelung diskutiert.

Fig. 1 zeigt somit eine Übersicht der fahrzeuginternen Luftgüteregelung zur Detektion umweltbedingter Schadstoffquellen und Innenraumüberwachung bezüglich CO2-Konzentration und Integration weiterer umluftrelevanter Informationsquellen.

### Tunnelbauwerke 5

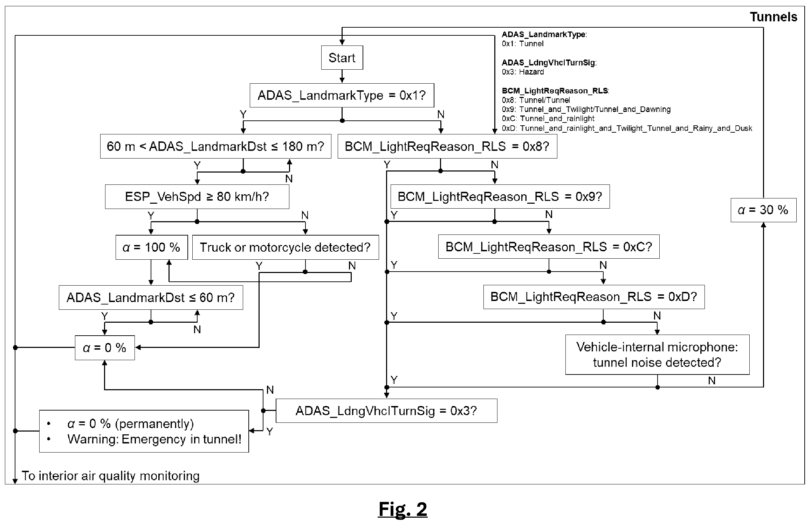

Zur Erfassung von Tunnelbauwerken dienen die CAN-Datenbussignale des ADAS-Datenbusses ADAS_LandmarkType und ADAS_LandmarkDst sowie BCM_LightReqReason_RLS des kombinierten Regen-Licht-Sensors (RLS), wie in Fig. 2 zu sehen ist.

Fig. 2 zeigt beispielhaft ein mögliches Flussdiagramm zur Detektion von Tunnelbauwerken mittels Fahrzeugdatenbussignalen.

Erkennt das Fahrzeug einen Tunnel mittels ADAS_LandmarkType, wird dessen aktuelle Distanz zum Fahrzeug durch ADAS_LandmarkDst abgefragt, wie in Fig. 2 dargestellt ist. Damit einem angenehmen Raumklima - mit besonderem Augenmerk auf eine ausgeglichene CO2-Konzentration, wie später noch erläutert wird - in der Fahrzeugkabine Rechnung getragen wird, beabsichtigt die vorgeschlagene Erfindung vor Tunnelfahrten eine Stoßlüftung des Innenraums durch vollständiges Öffnen der Umluftklappe.

Da jedoch bereits kurz vor Einfahrt in den Tunnel erhöhte Schadstoffkonzentrationen entstehen können, die von anderen Verkehrsteilnehmern durch beispielsweise Feinstaub (Particulate matter, PM), Kohlenstoffmonoxid (CO) und Stickoxide (NO_{X}) verursacht werden können, ist es ratsam, ein Öffnen der Klappe kontrolliert durchzuführen. Die Oxidation des Treibstoffs in Verbrennungskraftmaschinen findet bei Fahrzeuggeschwindigkeiten v ≥ 80 km/h in aller Regel beinahe vollständig statt, weshalb von den anderen Fahrzeugen keine Schadstoffbelastung sowie Geruchsbeeinträchtigung ausgeht. Aus diesem Grund wird im weiteren Ablauf der Fig. 2 die momentane Fahrzeuggeschwindigkeit v mittels ESP_VehSpd ermittelt, sobald sich das Fahrzeug 180 m vor Tunneleintritt befindet. Fährt das Fahrzeug - und folglich die meisten anderen Verkehrsteilnehmer - schneller als 80 km/h, wird die Umluftklappe vollständig geöffnet (α = 100 %, Fig. 2), damit vor Antritt der bevorstehenden Tunnelfahrt ein Teil des ackumulierten CO2 aus dem Fahrgastraum entweichen kann. Dabei bezeichnet α die prozentuelle Öffnung der Klappe, sodass eine vollständig geschlossene Klappe durch α = 0 % und eine vollständig geöffnete Klappe durch α = 100 % gekennzeichnet wird, wie bereits erwähnt wurde.

Die Klappe bleibt solange geöffnet, bis sich das Fahrzeug 60 m vor dem erkannten Tunnel befindet (Fig. 2), ehe sie sich proaktiv schließt, um ein Ansaugen der Tunnelluft zu vermeiden. Während der Tunnelfahrt übernimmt der RLS anhand veränderter Helligkeitswerte die Detektion (BCM_LightReqReason_RLS) und verhindert damit ein vorzeitiges Öffnen der Klappe. Außerdem erkennt die vorliegende Erfindung Tunnelfahrten durch einen erhöhten Schalldruckpegel im Fahrzeuginnenraum, gemessen vom Mikrofon der Freisprecheinrichtung, wie in Fig. 2 dargestellt wird. Falls sich das Fahrzeug mit einer geringeren Geschwindigkeit v als 80 km/h vor Eintritt in den Tunnel bewegt, wird weiterhin ermittelt, ob ein Lkw oder einspuriges Fahrzeug vorausfährt, wie in Fig. 2 zu sehen ist. Diese Information wird ebenfalls vom ADAS-Datenbus mit dezidierten Signalen zur Verfügung gestellt, wobei die proaktive Detektion gewisser Fahrzeuggruppen zur Regelung der Umluftklappe später dargelegt ist. Befindet sich ein Lkw oder Motorrad vor dem Fahrzeug, kann eine Stoßlüftung aufgrund potentiell hoher Schadstoffe und Geruchsbeeinträchtigung nicht stattfinden, und die Klappe wird geschlossen (α = 0 %, Fig. 2). Erkennt das Fahrzeug hingegen weder Lkw noch Motorrad, wir die Klappe geöffnet (α = 100 %).

Situationen, in denen es zu stockendem Verkehr bzw. Stau in Tunnelbauwerken kommt, werden durch Berücksichtigung eines weiteren Fahrzeugsignals erkannt. Dazu erfasst das Signal ADAS_LdngVhclTurnSig den Richtungsanzeiger des vorausfahrenden Fahrzeugs. Wird dessen aktiviertes Warnblinklicht in einem Tunnel erkannt (Fig. 2), wie z. B. vielfach bei Notbremsungen automatisch oder zur Signalisierung vorausliegenden Verkehrsstaus manuell eingeschaltet, schließt sich die Klappe (α = 0 %), bis das Fahrzeug den Tunnel verlassen hat. Währenddessen wird eine Regelung der inneren CO2-Konzentration (siehe hierzu unten) gänzlich außer Kraft gesetzt, um das Eintreten potentiell toxischer Gase in einem möglichen Brandfall zu unterbinden.

Falls kein Tunnel durch ADAS_LandmarkType,

BCM_LightReqReason_RLS und das Fahrzeugmikrofon erkannt wurde, kann die Klappe geöffnet werden (α = 30 %) und die eben beschriebene Abfrage fängt von vorne an, wie Fig. 2 entnommen werden kann.

### Unterführungen 6

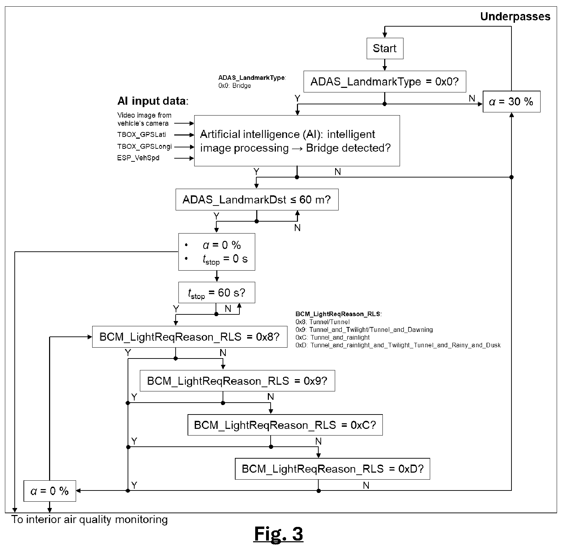

Das vorausschauende Schließen der Umluftklappe bei der Erkennung von Unterführungen erfolgt mittels Bild- und Distanzdatenverarbeitung am Steuergerät der Klimaanlage (Electrical Climate Controller, ECC). Für die in Fig. 3 abgebildete Schaltungs- bzw. Detektionslogik werden folgende Signale des Fahrzeugs eingelesen:
- ADAS_LandmarkType,
- ADAS_LandmarkDst,
- BCM_LightReqReason_RLS,
- ESP_VehSpd,
- TBOX_GPSLati,
- TBOX_GPSLongi und
- Videobild der fahrzeuginternen Frontkamera.

Weiters werden die Schaltsignale α für die prozentuelle Angabe der Umluftklappenöffnung (siehe weiter oben) und das Detektionssignal des bildverarbeitenden künstlichen Intelligenz (KI)-Blocks als Signal an den ECC sowie ein auf s basierender Timer verwendet (Fig. 3).

Fig. 3 zeigt beispielhaft ein mögliches Flussdiagramm zur Detektion von Unterführungen bzw. -querungen mittels Fahrzeugdatenbussignalen und KI.

Für die Ermittlung und Schaltung der Situationserkennung werden die CAN-Datenbussignale ADAS_LandmarkType und ADAS_LandmarkDst des ADAS-Datenbusses sowie ein Videobildsignal der Frontkamera für die Verarbeitung in einem KI-Block eingelesen (Fig. 3).

Dabei gibt das Signal ADAS_LandmarkType die Information zur Objekterkennung einer Brücke aus, welches in weiterer Folge durch die Bestätigung der Bilderkennung im KI-Block mittels Bilddatenanalyse aus der Frontkamera die Abfrage des Signals ADAS_LandmarkDst in der Logik ansteuert.

Wird also zweifelsfrei ein Objekt als Brücke oder Unterquerung identifiziert und durch die Bilderkennung bestätigt, schaltet sich die Distanzabfrage ein, welche in regelmäßigen Abständen überprüft, wie weit sich das erkannte Objekt vom Fahrzeug befindet. Sobald die parametrierbare Schaltschwelle von 90 m im Signal ADAS_LandmarkDst unterschritten wird, werden Stellbefehle und In-formationen bezüglich Umluftsignal an den ECC und in weiterer Folge an den Stellmotor der Umluftklappe übermittelt. Die Klappe bleibt durch eine Timer-Steuerung tstop für eine Mindestdauer von 60 s mit α = 0 % geschlossen, um wiederholtes Öffnen und Schließen in Hinblick auf die Lebensdauer des Stellmotors zu vermeiden und den damit verbundenen Verschleiß der mechanischen Motorkomponenten zu reduzieren.

Damit ein erhöhter Rechenaufwand durch ständiges Senden der Videobilder an die KI und ein folglich großer Datenverkehr verhindert werden, definiert sich die Übermittlungsfrequenz fpic der Videobilder geschwindigkeitsabhängig (ESP_VehSpd) anhand der folgenden Tab. 1.

Die folgende Tabelle (Tab. 1) zeigt: Übermittlungsfrequenz der Videobilder fpic an die KI in Abhängigkeit von der Fahrzeuggeschwindigkeit v.

| **Geschwindigkeit *v* / km/h** | **Übermittlungsfrequenz *f*_{pic} / 1/s** |
|---|---|
| 0 | 1/10 |
| 0 < *v ≤* 20 | 1/3 |
| 20 < *v ≤* 70 | 1 |
| *v> 70* | 5 |

Wie aus Tab. 1 zu entnehmen ist, wird das momentane Videobild bei Fahrzeugstillstand, also v = 0 km/h, alle 10 s an die KI gesendet, während die Übermittlungsfrequenz fpic mit steigender Fahrzeuggeschwindigkeit v zunimmt, um dynamische Einflüsse und spontane Ereignisse im Straßenverkehr zu berücksichtigen.

Um eine Fehldetektion der ADAS- und KI-Komponente zwischen einer aufkommenden Unterquerung und einem Tunnelportal redundant kompensieren zu können, wird nach Ablauf des Timers tstop eine Abfrage an den RLS via BCM_LightReqReason_RLS gestartet. Gibt das Signal BCM_LightReqReason_RLS einen Wert zurück, welcher auf einen Tunnel schließen lässt - sprich: 0x8, 0x9, 0xC oder 0xD -, bleibt das Signal an die Umluftklappe mit α = 0 % aufrecht. Sollte nach Beendigung der Bedingung kein Signal des RLS mehr vorliegen, wird das Stellsignal der Klappe für die Frischluftspülung α > 0 % an den ECC weitergegeben. Sollte das Signal BCM_LightReqReason_RLS keinen Wert liefern, welcher diese Redundanzschaltung aktiviert, und wird nach Ablauf des Timers tstop keine erneute Erkennung eines Objekts durch ADAS_LandmarkType angezeigt, wird das Signal zum Öffnen der Umluftklappe an den ECC und die Innenraumluftsimulation (siehe hierzu im entsprechenden Abschnitt) abgegeben.

### Baustellenbereiche 7

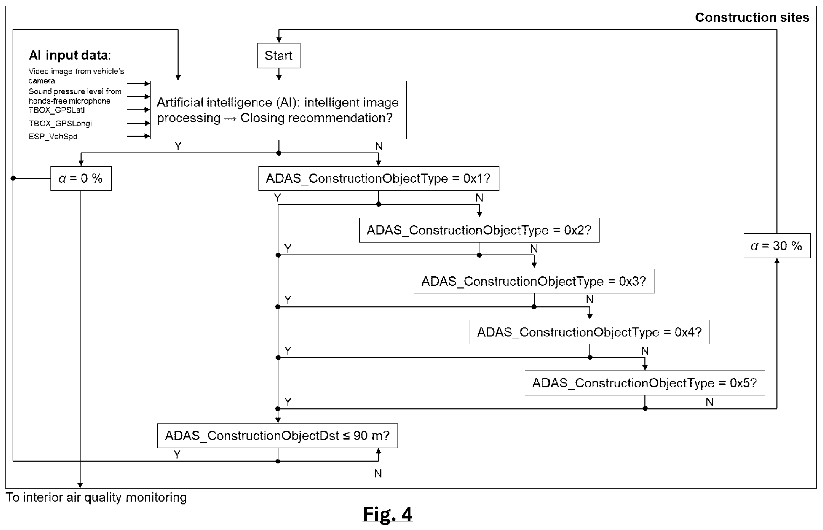

Zur Detektion von Baustellen als Quellen hoher Schadstoffbelastung werden einer KI mehrere Eingangsdaten - Videobild der fahrzeuginternen Frontkamera, Schalldruckpegel in der Fahrzeugkabine, geographische Koordinaten, d. h. Breitengrad (TBOX_GPSLati) und Längengrad (TBOX_GPSLongi), und Fahrzeuggeschwindigkeit (ESP_VehSpd) - bereitgestellt, um als Ausgabe eine Empfehlung zu erhalten, ob die Umluftklappe geschlossen werden soll (Fig. 4).

Fig. 4 zeigt beispielhaft ein mögliches Flussdiagramm zur Detektion von Baustellen mittels KI und Fahrzeugdatenbussignalen.

Die KI analysiert das Videobild in Hinblick auf Situationen und Objekte, die darauf zu erkennen sind und mit großer Wahrscheinlichkeit zu einer Verschlechterung der äußeren Luftqualität führen. Unter Situationen werden dabei Fahrszenarien im Straßenbetrieb, wie beispielsweise Baustellen(-bereiche), verstanden, während darin vorkommende Objekte, z. B. Baustellenschilder, Geschwindigkeitsbegrenzungen, Fahrbahnleitelemente, Baufahrzeuge (Planierraupe, Bagger, Fahrmischer etc.), Arbeitsgeräte (Betonmischer, Drucklufthammer, Abbruchhammer etc.), Bauarbeiter in Schutzkleidung etc. darstellen. Die Videobilder der Frontkamera werden analog zum obigen Abschnitt gemäß Tab. 1 in definierten Zeitabständen an die KI gesendet.

Es gibt unterschiedliche Erscheinungsformen von Baustellen. Beispielsweise wird eine Baustelle durch Objekte (Schilder o. Ä.) angekündigt, jedoch sind keine Straßenarbeiten erkennbar, oder die Warnung vor Bauarbeiten ist wiederum unzureichend beschildert bzw. sichtbar. Aufgrund der vielfältigen möglichen Erscheinungsformen, die unterschiedliche Einflüsse auf die umliegende Luftqualität ausüben, untersucht die KI das übermittelte Videobild weiterhin auf spezielle Merkmale, wie Rauchentwicklung, Staubaufwirbelung, Funkenentstehung etc.

Lärmintensive Baustellen, verursacht durch den gleichzeitigen Betrieb mehrerer Baufahrzeuge und lauter Arbeitsgeräte, erkennt die KI anhand eines erhöhten Schalldruckpegels im Fahrzeuginnenraum, gemessen vom Mikrofon der Freisprechanlage (Fig. 4).

Unter Berücksichtigung der geographischen Koordinaten TBOX_GPSLati und TBOX_GPSLongi (Fig. 4) werden Missinterpretationen vermieden, da die Luftqualität in einer beispielsweise pflanzenreichen Umgebung auch vom Ort abhängt, z. B. urbaner oder ruraler Bereich. Um dem dynamischen Einfluss der Fahrzeugbewegung Rechnung zu tragen, wird der KI die momentane Fahrzeuggeschwindigkeit v ESP_VehSpd übermittelt (Fig. 4).

Falls die KI aufgrund der oben angeführten Parameter empfiehlt, die Klappe zu schließen (α = 0 %, Fig. 4), um den Eintrag verschmutzter Außenluft in den Fahrgastraum zu verhindern, wird dieser Befehl an den ECC und in weiterer Folge an die Klappe weitergeleitet.

Falls die KI keine Notwendigkeit darin sieht, die Klappe zu schließen, stehen fahrzeugseitig die CAN-Datenbussignale ADAS_ConstructionObjectType und ADAS_ConstructionObjectDst des ADAS-Datenbusses (Fig. 4) als weitere Möglichkeit zur Detektion von Baustellen zur Verfügung. Während ADAS_ConstructionObjectType eines von insgesamt fünf verschiedenen Baustellenobjekten, wie z. B. Cone (Pylon), Fishbone_Left (fischgrätenartiger Straßenverlauf im Baustellenbereich nach links), Fishbone_Right (fischgrätenartiger Straßenverlauf im Baustellenbereich nach rechts), Obstruction_Left (Hindernis links) und Obstruction_Right (Hindernis rechts), erkennt, gibt ADAS_ConstructionObjectDst die Distanz des Fahrzeugs in m zum vorausliegenden Baustellenobjekt an.

Sobald das Fahrzeug eines der eben beschriebenen Baustellenobjekte erkennt, wird dessen Entfernung gemessen, um darauf proaktiv reagieren zu können. Unterschreitet der Abstand zwischen Fahrzeug und Baustellenobjekt eine hinreichende Distanz, beispielsweise 90 m, wird diese Information an die KI gegeben, die erneut das momentane Videobild auf die oben beschriebenen Situationen und Objekte unter Berücksichtigung der Eingangsdaten analysiert und infolgedessen eine Entscheidung trifft (Fig. 4). Wird von ADAS_ConstructionObjectType kein Baustellenobjekt erkannt, kann die Klappe geöffnet werden (α = 30 %) und die Abfrage beginnt erneut.

### Verkehrsstau 8

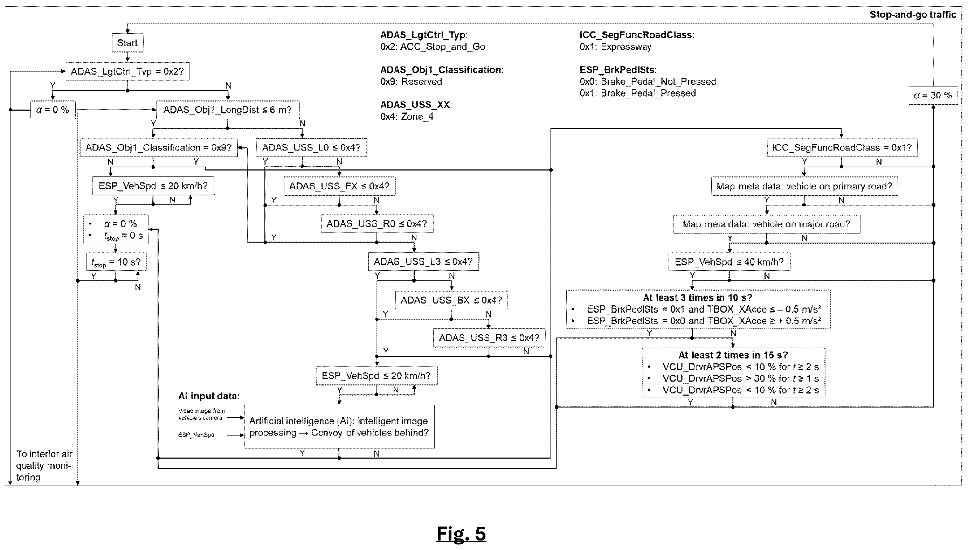

Eine weitere Quelle verminderter Luftqualität stellt Verkehrsstau dar (Fig. 1, Block Exterior air quality monitoring, also Außenluft-Qualitätsüberwachungsmodul 2). Fig. 5 schlägt deshalb ein Verfahren vor, mithilfe unterschiedlicher Informationen auf vorausliegenden Stau zu schließen. Dazu bieten sich fahrzeugseitig die CAN-Datenbussignale ADAS_LgtCtrl_Typ, ADAS_Obj 1_Classification, ADAS_Obj 1_LongDist des ADAS-Datenbusses, die Fahrzeuggeschwindigkeit v ESP_VehSpd, Bremspedalstellung ESP_BrkPed1Sts, Fahrpedalstellung VCU_DrvrAPSPos, Beschleunigung a in Längsrichtung des Fahrzeugs TBOX_XAcce und die aktuell befahrene Straßenkategorie ICC_SegFuncRoadClass an. Zudem stehen Kartenmetadaten zur Verfügung.

Fig. 5 zeigt beispielhaft ein mögliches Flussdiagramm zur Detektion von Verkehrsstau mittels Fahrzeugdatenbussignalen, Kartenmetadaten und KI.

Befindet sich das Fahrzeug im Modus ACC_Stop_and_Go, abgebildet durch das Signal ADAS_LgtCtrl_Typ, wird die Klappe geschlossen (α = 0 %, Fig. 5). Trifft dies nicht zu, wird die Distanz in Längsrichtung des Fahrzeugs zum vorausliegenden Objekt mittels ADAS_Obj 1_LongDist überprüft. Ab einem Abstand von 6 m oder weniger erfolgt die Abfrage, ob sich tatsächlich ein Objekt, wie beispielsweise ein Pkw, vor dem Fahrzeug befindet (ADAS_Obj 1_Classification), wobei Letzteres eine Geschwindigkeit v von maximal 20 km/h aufweisen darf, damit die Klappe für 10 s schließt (α = 0 %, Fig. 5). Die zusätzliche Frage nach einem Objekt stellt sicher, dass ein Schließen der Klappe in Situationen, wie z. B. das Parken vor einer Wand o. Ä., vermieden wird.

Kann keine Distanz durch ADAS_Obj 1_LongDist ausgegeben werden, überprüfen die Ultraschallsensoren (USSs) an der Fahrzeugfront (ADAS_USS_L0, ADAS_USS_FX, ADAS_USS_R0) in Kombination mit dem Signal ADAS_Obj 1_Classification, ob ein Fahrzeug ca. 2,5 m (Zone_4) oder näher bei Geschwindigkeiten v bis zu 20 km/h vorausliegt. Trifft dies zu, schließt sich die Klappe für eine Dauer von 10 s (α = 0 %, Fig. 5).

Wenn die vorderen USSs zwar kein Objekt, aber stattdessen die USSs am Fahrzeugheck ein (dicht auffahrendes) Objekt bis maximal 20 km/h erkennen, wird das Videobild der Heckkamera an eine KI gesendet. Diese beurteilt, ob sich eine Fahrzeugkolonne - und damit im weiteren Sinne nachliegender Stau - hinter dem Fahrzeug befindet. Im positiven Fall wird die Klappe für 10 s geschlossen (α = 0 %, Fig. 5). Die Videobilder der Heckkamera werden analog zum vorhergehenden Abschnitt gemäß Tab. 1 in definierten Zeitabständen an die KI gesendet.

Kann kein Objekt mittels ADAS_Obj1_Classification oder den hinteren USSs oder zurückliegender Stau von der KI erkannt werden, schlägt die vorliegende Erfindung folgende Mustererkennung zur Detektion von Stau vor: wiederholtes Bremsen und Beschleunigen sowie schlagartige Fahrpedaländerungen in jeweils kurzen Zeitabständen. Da jedoch diese Muster während einer typischen Fahrt im urbanen Bereich sehr häufig vorkommen, müssen zusätzliche Kriterien erfüllt werden, um ein ständiges Schließen der Klappe zu verhindern. Deshalb wird mit dem Signal ICC_SegFuncRoadClass und den GPS-Kartenmetadaten überprüft, ob sich das Fahrzeug im außerurbanen Gebiet befindet, z. B. auf einer Autobahn oder Schnellstraße (Fig. 5). Trifft dies zu, wird sichergestellt, dass sich das Fahrzeug mit einer Geschwindigkeit v von maximal 40 km/h bewegt, ehe die Blöcke zur Mustererkennung gestartet werden.

Wiederholtes Verzögern und Anfahren wird dadurch erkannt, dass innerhalb von 10 s mindestens dreimal zuerst das Bremspedal (ESP_BrkPedlSts) betätigt wird, sodass das Fahrzeug mit einer Verzögerung (TBOX_XAcce) von mindestens 0,5 m/s² bremst, und dann bei losgelassenem Bremspedal das Fahrzeug mit zumindest 0,5 m/s² beschleunigt wird, wie in Fig. 5 zu sehen ist.

Plötzliche Änderungen des Fahrpedals sollen dadurch abgebildet werden, indem innerhalb von 15 s mindestens zweimal das Pedal weniger als 10 % für mindestens 2 s, danach mehr als 30 % für zumindest 1 s und schließlich weniger als 10 % für eine Dauer von mindestens 2 s gedrückt wird, wie in Fig. 5 dargestellt ist. Wird eines der beiden eben beschriebenen Muster erkannt, schließt sich die Klappe für 10 s (α = 0 %, Fig. 5).

Zuletzt kann mit den Echtzeit-Verkehrsdaten (Traffic data) der Navigationsmetadaten abgeklärt werden, ob sich das Fahrzeug einem bereits hinterlegten Verkehrsstau nähert, um die Klappe proaktiv zu schließen (Fig. 1, Block Navigational (meta) data).

Falls das Fahrzeug weder durch Bussignale noch Kartenmetadaten einen Stau feststellt, kann die Klappe geöffnet werden (α = 30 %) und der soeben dargelegte Ablauf fängt von vorne an, wie in Fig. 5 zu sehen ist.

### Mautstellen & Autobahnen bzw. Schnellstraßen Auf- & Abfahrten 9

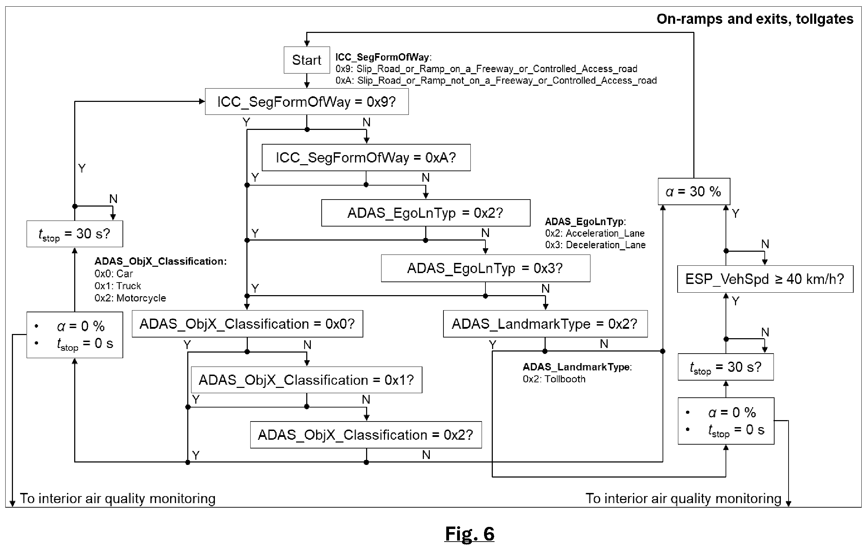

Die CAN-Datenbussignale ICC_SegFormOfWay und ADAS_EgoLnTyp des ADAS-Datenbusses dienen zur Erfassung von Autobahnauffahrten und Autobahnabfahrten bzw. Beschleunigungs- und -verzögerungsstreifen (Fig. 6). Zusätzlich detektiert ein weiteres Signal des ADAS-Datenbusses, ADAS_ObjX_Classification, bis zu acht Verkehrsteilnehmer gleichzeitig, wie beispielsweise Car (Pkw), Truck (Lkw) oder Motorcycle (Motorrad). Das CAN-Datenbussignal ADAS_LandmarkType dient u. a. zum Erkennen einer Tollbooth (Mautstelle). Diese Informationen sind essenziell, um auf potentielle Schadstoffquellen rechtzeitig reagieren zu können. Für die Auflösebedingung wird weiters das Signal ESP_VehSpd eingelesen.

Fig. 6 zeigt beispielhaft ein mögliches Flussdiagramm zur Detektion von Autobahnauf- bzw. -abfahrten, Beschleunigungs- und Verzögerungsstreifen sowie von Mautstellen mittels Fahrzeugdatenbussignalen.

Erkennt das Fahrzeug entweder eine Autobahnauf- bzw. -abfahrt mittels ICC_SegFormOfWay oder einen Beschleunigungs- oder Verzögerungsstreifen mittels ADAS_EgoLnTyp, wird durch ADAS_ObjX_Classification abgefragt, ob sich in der momentanen Fahrsituation ein anderer Verkehrsteilnehmer, d. h. ein Pkw, Lkw oder Motorrad, vor dem Fahrzeug befindet. Ist ein weiteres Fahrzeug voraus, wird ein Befehl zum Schließen der Umluftklappe (α = 0 %) an den ECC gesendet, um den Eintrag verschmutzter Außenluft in den Fahrgastraum zu verhindern (Fig. 6). Ebenso schließt die Klappe, wenn von ADAS_LandmarkType eine vorausliegende Mautstelle erkannt wurde. Die Klappe bleibt für eine Dauer von 30 s geschlossen (Fig. 6), um wiederholtes Öffnen und Schließen des Stellmotors zu verhindern, wie bereits zuvor angeführt. Sollte das Signal ADAS_LandmarkType keine Mautstelle mehr detektieren und der Timer von 30 s abgelaufen sein, wird erst nach Überschreiten einer Geschwindigkeit von v > 40 km/h der Schließbefehl für die Umluftklappe an den ECC aufgehoben.

Falls keine Autobahnauf- bzw. -abfahrt, kein Beschleunigungs- oder Verzögerungsstreifen, kein Fahrzeug auf einem der vorhin erwähnten Knotenpunkte oder keine Mautstelle erkannt wurde, kann die Klappe geöffnet werden (α = 30 %) und die eben beschriebene Abfrage fängt von vorne an, wie aus Fig. 6 entnommen werden kann.

### Objekterkennung 10

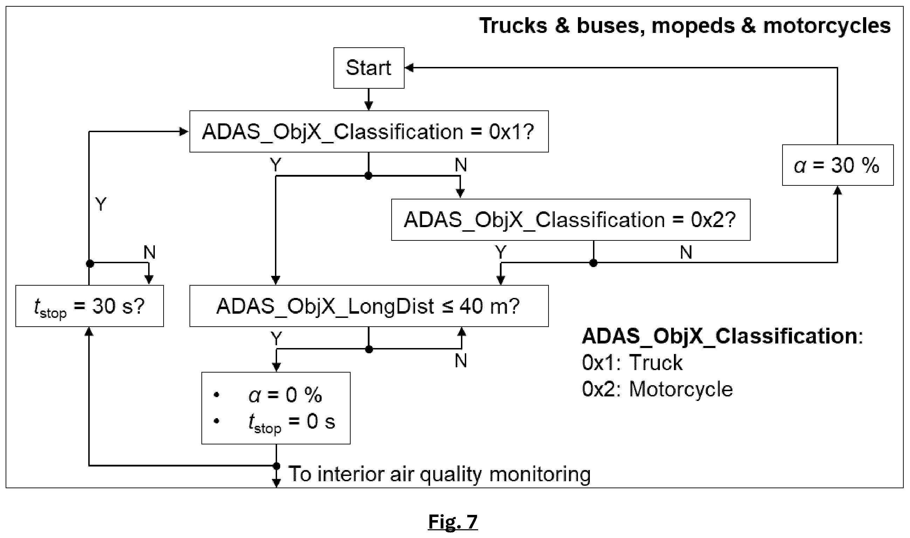

Die CAN-Daten¬bussignale ADAS_ObjX_Classification und ADAS_ObjX_LongDist des ADAS-Datenbusses dienen zur Erfassung von Verkehrsteilnehmern und zur Bestimmung ihrer Entfernung. Das Signal ADAS_ObjX_Classification klassifiziert bis zu acht Objekte gleichzeitig, wie z. B. Truck (Lkw) oder Motorcycle (Motorrad), während das Signal ADAS_ObjX_LongDist die Entfernung dieser Objekte in Längsrichtung in m zum Fahrzeug angibt (Fig. 7). Diese Informationen sind essenziell, um auf potentielle Schadstoffquellen rechtzeitig reagieren zu können.

Fig. 7 zeigt beispielhaft ein mögliches Flussdiagramm zur Detektion von Lkws und Motorrädern mittels Fahrzeugdatenbussignalen.

Erkennt das Fahrzeug entweder einen Lkw oder ein Motorrad, wird dessen Entfernung in Fahrzeuglängsrichtung gemessen, um darauf proaktiv reagieren zu können. Unterschreitet der Abstand zwischen Fahrzeug und erkanntem Objekt 40 m, wird ein Befehl zum Schließen der Umluftklappe (α = 0 %) an den ECC gesendet, um den Eintrag verschmutzter Außenluft in den Fahrgastraum zu verhindern (Fig. 7). Die Klappe bleibt für eine Dauer von 30 s geschlossen (Fig. 7), um wiederholtes Öffnen und Schließen des Stellmotors zu verhindern, wie bereits zuvor angeführt.

Falls von ADAS_ObjX_Classification weder ein Lkw noch ein Motorrad erkannt wird, kann die Klappe geöffnet werden (α = 30 %) und die eben beschriebene Abfrage fängt von vorne an, wie Fig. 7 entnommen werden kann.

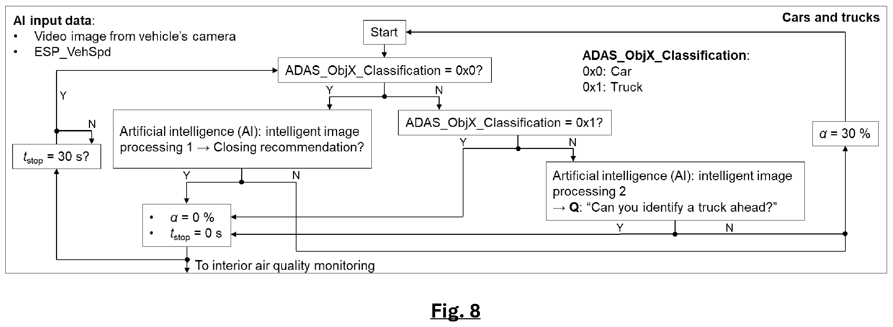

Diese Methode einer Objektklassifizierung kann dahingehend erweitert werden, spezifische Objektgruppen zu identifizieren, wie im Folgenden aufgezeigt werden soll. Das Signal ADAS_ObjX_Classification klassifiziert neben Lkws und Motorrädern auch Pkws (Car), wie in Fig. 8 zu sehen ist.

Fig. 8 zeigt beispielhaft ein mögliches Flussdiagramm zur Detektion von Pkws und Lkws mittels Fahrzeugdatenbussignal und KI.

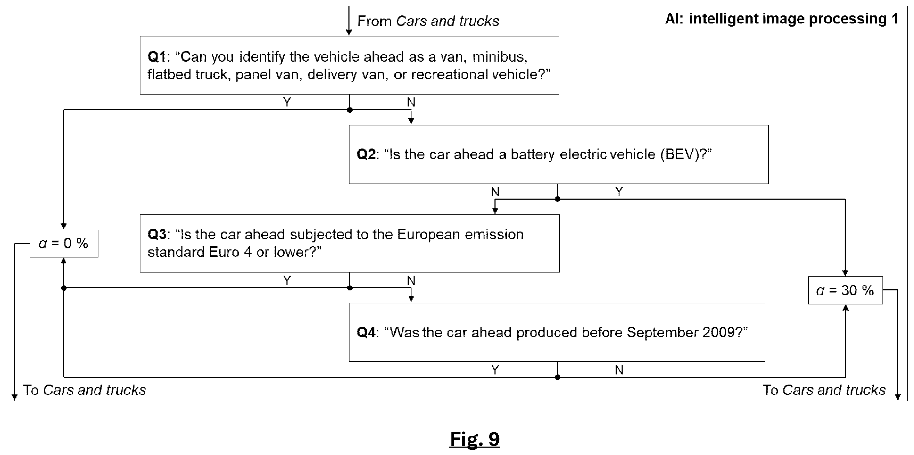

Erkennt das Fahrzeug einen Pkw, wird das aktuelle Videobild der Frontkamera an eine KI übermittelt. Dabei werden der KI sowohl das Videobild der fahrzeuginternen Frontkamera als auch die Fahrzeuggeschwindigkeit v (ESP_VehSpd) als Eingangsdaten bereitgestellt, um als Ausgabe eine Empfehlung zu erhalten, ob die Umluftklappe geschlossen werden soll (Fig. 8). Die KI analysiert das Bild in Hinblick auf Objekte, die darauf zu erkennen sind und mit großer Wahrscheinlichkeit zu einer Verschlechterung der äußeren Luftqualität führen. In diesem Zusammenhang werden der KI folgende, in Fig. 9 angeführte Fragen gestellt.

Fig. 9 zeigt beispielhaft ein mögliches Flussdiagramm zur Befragung der KI über vorausfahrende Fahrzeuge.

Gemäß Fig. 9 wird überprüft, ob es sich beim vorausfahrenden Fahrzeug um einen (Klein-)Transporter, Kleinbus, Pritschenwagen, Kastenwagen, Lieferwagen oder um ein Wohnmobil handelt, wobei jedes dieser Fahrzeuge ein sofortiges Schließen der Klappe bewirkt (α = 0 %, Fig. 9). Die Klappe bleibt für eine Dauer von 30 s geschlossen (Fig. 8), um wiederholtes Öffnen und Schließen zu vermeiden, wie bereits in einem vorherigen Abschnitt angeführt.

Wird keines der eben erwähnten Fahrzeuge von der KI erkannt, handelt es sich um einen Pkw, womit ADAS_ObjX_Classification bestätigt wurde. Daher wird als Nächstes gefragt, ob der vorausfahrende Pkw von der KI als batterieelektrisches Fahrzeug (Battery electric vehicle, BEV) identifiziert wird (Fig. 9). Trifft dies zu, wird dieser Pkw emissionsfrei betrieben, weshalb die Klappe geöffnet werden kann (α = 30 %, Fig. 9). Im gegenteiligen Fall wird weiterhin überprüft, ob der vorausfahrende Pkw der Abgasnorm Euro 4 oder älter unterliegt, das zum Schließen der Klappe (α = 0 %, Fig. 9) führt. Zuletzt erfolgt die Abfrage, ob der vorausfahrende Pkw vor September 2009 - also vor dem Einführungszeitpunkt der Abgasnorm Euro 5 zur Typgenehmigung - produziert wurde. Diese Frage ist demnach eine alternative Formulierung der vorangegangenen und dient im Falle von eventuellen Missinterpretationen der KI als redundante Abklärung. Dementsprechend wird bei positiver Antwort die Klappe geschlossen (α = 0 %), während sie im negativen Fall geöffnet werden kann (α = 30 %), wie in Fig. 9 dargestellt ist.

Wird mittels ADAS_ObjX_Classification kein Pkw erkannt, erfolgt die Abfrage nach einem Lkw, der zu einem sofortigen Schließen der Umluftklappe (α = 0 %, Fig. 8) führt.

In vielen Fällen, beispielsweise bei Autobahnfahrten, kann es zu Situationen kommen, in denen mehrere Fahrzeuge hintereinanderfahren. Um auch Lkws erkennen zu können, die sich z. B. drei oder vier Fahrzeuge voraus befinden, wird das Videobild zur Analyse an die KI gesendet, wie in Fig. 8 zu sehen ist. Die Videobilder der Frontkamera werden analog zu vorher, gemäß Tab. 1, in definierten Zeitabständen an die KI gesendet. Falls weder ein Pkw noch ein Lkw erkannt wird, kann die Klappe geöffnet werden (α = 30 %) und die eben beschriebene Abfrage fängt von vorne an, wie Fig. 8 entnommen werden kann.

### Ampelanlagen und Kreuzungsbereiche 11

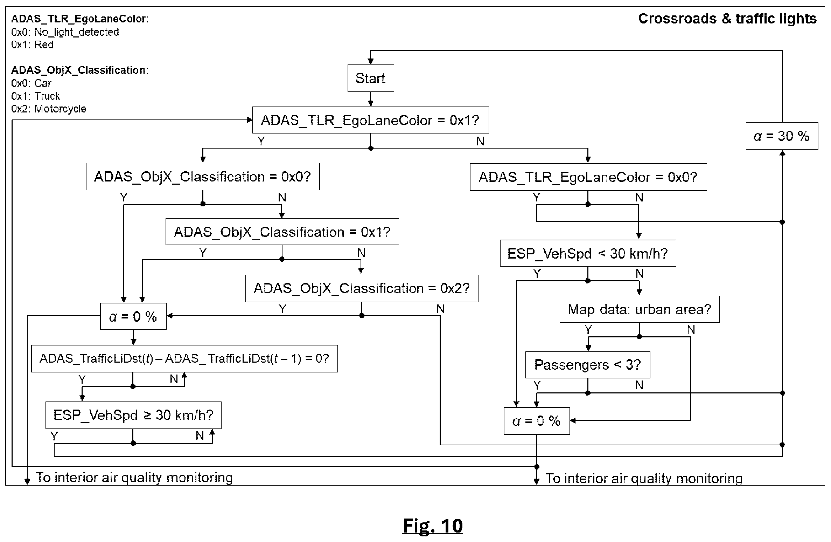

Bei der Erkennung von Ampeln und Kreuzungen spielt das CAN-Datenbussignal des ADAS-Datenbusses ADAS_TLR_EgoLaneColor, das die verschiedenen Farben einer Ampel ausgibt, eine wesentliche Rolle (Fig. 10). Des Weiteren werden die Distanz zur Ampel ADAS_TrafficLiDst, die Ob-jektunterscheidung ADAS_ObjX_Classification, die Fahrzeuggeschwindigkeit v ESP_VehSpd und die Anzahl an Passagieren, ermittelt durch die Signale der Gurtschlösser, verwendet.

Fig. 10 zeigt beispielhaft ein mögliches Flussdiagramm zur Detektion von Ampelanlagen und Kreuzungsbereichen mittels Fahrzeugdatenbussignalen und Kartenmetadaten.

Erkennt das Fahrzeug eine rote Ampel durch ADAS_TLR_EgoLaneColor, wird mit ADAS_ObjX_Classification abgefragt, ob sich entweder ein Pkw, Lkw oder Motorrad voraus befindet, wie in Fig. 10 dargestellt ist. Trifft mindestens eine dieser drei Möglichkeiten zu, wird der Befehl zum Schließen der Klappe an den ECC gesendet (α = 0 %, Fig. 10). Wenn allerdings keines dieser Fahrzeuge erkannt wird, kann die Klappe geöffnet werden (α = 30 %). Dasselbe trifft zu, falls keine Ampel detektiert wird.

Damit ein zu frühes Öffnen der Klappe noch im Kreuzungsbereich verhindert wird, darf sich der momentane Abstand ADAS_TrafficLiDst(t) verglichen zum Abstand zur Ampel einen Zeitschritt früher ADAS_TrafficLiDst(t - 1) nicht mehr ändern. Zusätzlich muss die Geschwindigkeit v (ESP_VehSpd) zumindest 30 km/h betragen, was somit nur dann möglich ist, wenn das Fahrzeug die Ampel bereits passiert hat und beim Verlassen der Kreuzung beschleunigt. Folglich öffnet die Klappe (α = 30 %, Fig. 10).

Wenn sich das Fahrzeug mit niedrigen Geschwindigkeiten v unterhalb von 30 km/h einer Ampel nähert, die entweder gelb oder grün ist oder auf grün umschaltet, wird die Klappe geschlossen (α = 0 %, Fig. 10). Dies beschreibt den Fall des langsamen Durchfahrens von Kreuzungsbereichen, bei dem vermehrt Abgase und unangenehme Gerüche in den Fahrzeuginnenraum treten können.

Fährt das Fahrzeug jedoch schneller als 30 km/h, wird zusätzlich zwischen Gebiet und Passagieren unterschieden: Befindet sich das Fahrzeug laut den GPS-Metadaten im städtischen Bereich mit höchstens zwei Insassen, wird die Klappe geschlossen (α = 0 %, Fig. 10). Die Besatzungsgrenze ist damit zu erklären, dass die CO2-Konzentration durch häufiges Schließen wegen der Vielzahl an Kreuzungsbereichen im Stadtgebiet in Kombination mit mehr als zwei Passagieren schnell zunehmen würde - siehe hierzu unten. Im ländlichen Raum, in dem die Dichte an Ampeln naturgemäß geringer ist, wird daher die Klappe geschlossen, wie in Fig. 10 dargestellt ist. In jedem Fall erfolgt im weiteren Verlauf die erneute Abfrage nach einer roten Ampel, und der Ablauf beginnt von Neuem.

### Kreisverkehre 12

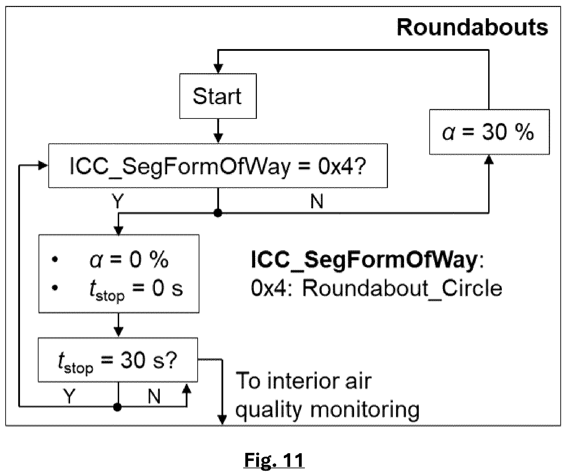

Wie Fig. 1 zu entnehmen ist, stellen Kreisverkehre ein weiteres Fahrszenario für potentiell niedrige Luftqualität dar. Um sie erkennen zu können, steht das CAN-Datenbussignal ICC_SegFormOfWay zur Verfügung, das bereits aus einem vorherigen Abschnitt bekannt ist und in der folgenden Fig. 11 zu sehen ist.

Fig. 11 zeigt beispielhaft ein mögliches Flussdiagramm zur Detektion von Kreisverkehren mithilfe des Fahrzeugdatenbusses.

Sobald ein Kreisverkehr durch ICC_SegFormOfWay detektiert wird, schließt sich die Klappe für 30 s, ehe erneut nach Kreisverkehren gefragt wird (Fig. 11). Falls kein Kreisverkehr vorausliegt, kann die Klappe geöffnet werden (α = 30 %) und die Abfrage fängt von vorne an.

### Tiefgaragen 13

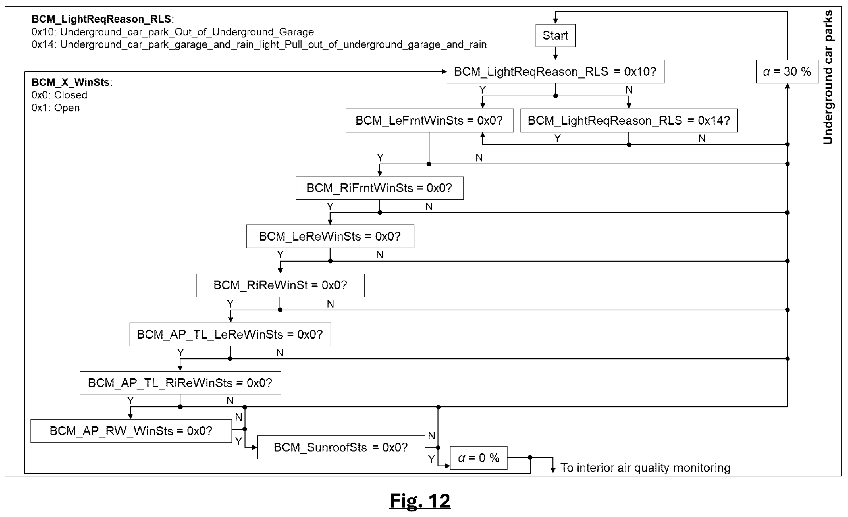

In einer Tiefgarage kann es mitunter zu erhöhter Abgasbelastung durch die ein- und ausfahrenden Fahrzeuge kommen, weshalb sie in Fig. 1 als letztes Szenario geringer Luftqualität angeführt ist. Für die folgende Abfrage in Fig. 12 werden neben BCM_LightReqReason_RLS auch die Zustände aller Fahrzeugfenster als CAN-Datenbussignale verwendet. Hierfür gilt für die vorliegende Nomenklatur der Fahrzeugscheiben:
- BCM_LeFrntWinSts als Öffnungsstatus der Fahrerseitenscheibe,
- BCM_RiFrntWinSts als Öffnungsstatus der Beifahrerseitenscheibe,
- BCM_LeReWinSts als Öffnungsstatus der linken Fondseitenscheibe,
- BCM_RiReWinSt als Öffnungsstatus der rechten Fondseitenscheibe,
- BCM_AP_TL_LeReWinSts als Öffnungsstatus der linken Kofferraumseitenscheibe,
- BCM_AP _TL_RiReWinSts als Öffnungsstatus der rechten Kofferraumseitenscheibe,
- BCM_AP_RW_WinSts als Öffnungsstatus der Heckscheibe und
- BCM_SunroofSts als Öffnungsstatus des Schiebedachs.

Fig. 12 zeigt beispielhaft ein mögliches Flussdiagramm zur Detektion von Tiefgaragen mittels Fahrzeugdatenbussignalen.

Der RLS stellt durch zwei Signalwerte von BCM_LightReqReason_RLS - also 0x10 und 0x14 - fest, ob sich das Fahrzeug in einer Tiefgarage befindet, wie in Fig. 12 angeführt ist. Bevor jedoch der Befehl zum Schließen der Klappe (α = 0 %) gesendet wird, erfolgt die Kontrolle, dass alle Fahrzeugfenster geschlossen sind. Solange nicht alle Fenster geschlossen sind, bleibt die Klappe geöffnet (α = 30 %). Der ECC merkt sich den zuletzt gesendeten Wert für eine Tiefgarage nach Abstellen des Fahrzeugs, um ein vorzeitiges Öffnen der Klappe nach Inbetriebnahme zu vermeiden. Wird keine Tiefgarage detektiert, kann die Klappe ebenso geöffnet werden (α = 30 %) und die Abfrage beginnt erneut.

Umgebungsluftgütebestimmung mittels KI-Datenverarbeitung - das Au-ßenluft-Qualifizierungsmodul 3

Die in den vorangegangenen Abschnitten erläuterten Luftqualitätsszenarien münden laut Fig. 1 im Block Außenluft-Qualifizierungsmodul 3 (Exterior air quality qualifier, EAQQ). Dieser Bereich bewertet zum einen das Ausmaß der erkannten Fahrszenarien auf die äußere Luftgüte in Form einer Luftqualitätsbewertung 17, also eines Air quality ratings für den Teilumluft-Block 25 im Innenluft-Qualitätsüberwachungsmodul 4 (Interior air quality monitoring), zum anderen teilt das Außenluft-Qualifizierungsmodul 3 dem Umluftklappenregler 1 durch Block flushing - also Verhinderung einer Umluftklappenöffnung 15 - mit, ob ein Spülen der Fahrzeugkabine - also ein Öffnen der Klappe - verhindert werden soll.

Für den Betrieb der Klimaanlage in Teilumluft (partieller Umluft) 25 bietet sich die Berücksichtigung allgemeiner Umweltzustände, im Modul Allgemeine Umweltbedingungen 20, wie z.B. das aktuelle lokale Wetter und Emissionen umliegender Gebäude, an. Dieser Aufgabe soll der im Außenluft-Qualifizierungsmodul 3 (EAQQ) integrierte und bevorzugt durch KI gesteuerte Block AI: General environmental conditions - Allgemeine Umweltbedingungen 20 - in Fig. 1 gerecht werden, der die Erlaubnis zum Teilumluftbetrieb mittels Bestätigung einer Umluftklappenöffnung 16 (activation approval) erteilt.

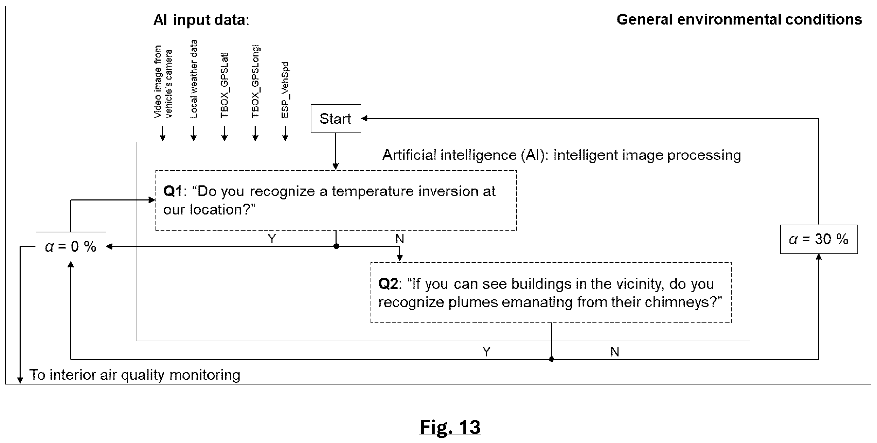

Zur Detektion von Inversionswetterlagen und Hausbrand umliegender Gebäude als Situationen bzw. Quellen hoher Schadstoffbelastung werden einer KI mehrere Eingangsdaten - Videobild der fahrzeuginternen Frontkamera, lokale Wetterdaten, geographische Koordinaten, d. h. Breitengrad (TBOX_GPSLati) und Längengrad (TBOX_GPSLongi), und Fahrzeuggeschwindigkeit v (ESP_VehSpd) - bereitgestellt, um als Ausgabe eine Empfehlung zu erhalten, ob die Umluftklappe geschlossen werden soll (Fig. 13).

Fig. 13 zeigt beispielhaft ein mögliches Flussdiagramm zur Detektion von Inversionswetterlagen und Hausbrand mittels KI.

Eine Inversionswetterlage, bei der die Lufttemperatur mit steigender Höhe zunimmt und sich somit eine warme Luftschicht oberhalb der kälteren Temperaturzone am Boden ausbildet, schließt Luftschadstoffe in bodennahen Gebieten ein. Deshalb herrscht bei Inversionswetterlagen eine höhere lokale Luftverschmutzung als bei beispielsweise Schönwetterlagen. Durch die Kombination der aktuellen GPS-Koordinaten (TBOX_GPSLati und TBOX_GPSLongi) und örtlichen Wetterinformationen analysiert die KI das momentane Videobild der fahrzeuginternen Frontkamera. Wird eine Inversionswetterlage erkannt, soll die Umluftklappe zur Reduzierung des Schadstoffeintrags in die Fahrzeugkabine geschlossen werden (α = 0 %, Fig. 13).

Im gegenteiligen Fall wird die Umgebung nach einer weiteren Quelle für verschmutzte Luft untersucht: Der aus Schornsteinen von mehreren Gebäuden austretende Rauch bewirkt das Ansammeln von Verbrennungsabgasen und unangenehmen Gerüchen in Bodennähe. Aus diesem Grund wird die KI weiterhin gefragt, ob Rauchfahnen umliegender Gebäude auf dem aktuellen Videobild zu erkennen sind, wie in Fig. 13 dargestellt ist. Insbesondere in urbanen Bereichen kann die KI ihre Abschätzung verfeinern, indem sie die GPS-Koordinaten (TBOX_GPSLati und TBOX_GPSLongi) für ihre Auswertung heranzieht. Die Videobilder der Frontkamera werden analog zu oben, gemäß Tab. 1, in definierten Zeitabständen an die KI gesendet.

Falls weder eine Inversionswetterlage noch Hausbrand umliegender Gebäude erkannt werden, kann die Klappe geöffnet werden (α = 30 %) und die eben beschriebene Abfrage fängt von vorne an, wie Fig. 13 entnommen werden kann.

### Integration von Kartendaten 21

Fig. 1 beinhaltet neben definierten Schadstoffszenarien im Block Außenluft-Qualitätsüberwachungsmodul 2 (Exterior air quality monitoring) noch weitere Situationen und Randbedingungen, die die Regelung der Luftzirkulation direkt beeinflussen. So können z.B. Metadaten des Navigationssystems, also Kartendaten und/oder Navigationsdaten 21, herangezogen werden, um kartografierte Quellen erhöhter Schadstoff- und Geruchsbelastung zu erfassen. Dies können beispielsweise neben den schon behandelten Tunnelbauwerken Industriegebiete, Kläranlagen, Papierfabriken, Tierzuchtbetriebe, Wasseraufbereitungsanlagen, Verkehrsdaten etc. sein.

Zur Veranschaulichung der Integration in das Gesamtsystem wird dieser Ansatz erklärt. Dazu werden folgende Signale für die Verarbeitung der Funktion in den ECC eingelesen:
- ESP_VehSpd,
- TBOX_GPSLati und
- TBOX_GPSLongi.

Des Weiteren werden diese Signale über die fahrzeuginterne Telematik-Box (TBOX) an einen KI-Block im Backend weitergeleitet, welcher folgende Analyse lostritt.

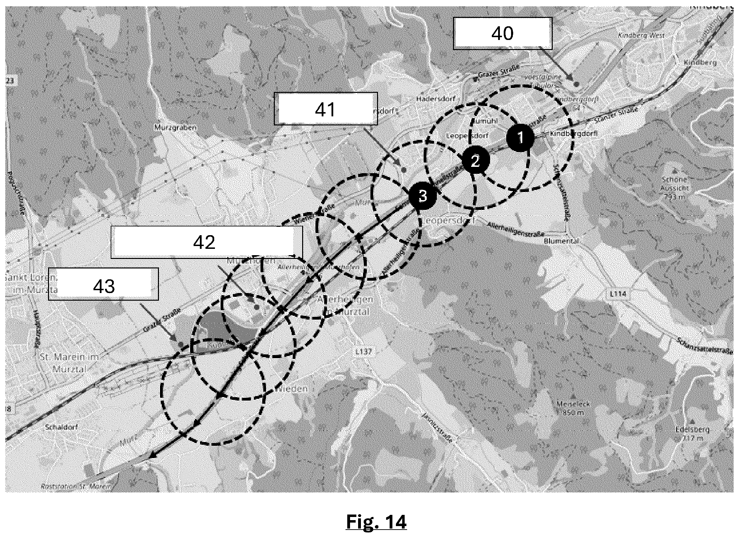

In einem ersten Schritt werden mindestens zwei GPS-Positionen über die CAN-Datenbussignale TBOX_GPSLati und TBOX_GPSLongi an die TBOX und weiters an eine KI-Einheit im Backend gesendet. Aus diesen wird in der KI-Einheit ermittelt, auf welcher Straße man sich befindet und in welcher Fahrtrichtung man unterwegs ist (Fig. 14, Punkte 1 bis 3). Aus der ermittelten Fahrtrichtung in Kombination mit der Information, auf welcher Straße man sich befindet, legt die KI automatisch eine Pufferzone um die Straßenmitte über den Straßenverlauf. In dieser Pufferzone werden anhand von Kartenmetadaten verschiedene, weiter oben angeführte Attribute mittels eines Skripts abgefragt, welche auf eine Verschlechterung der Außenluft schließen lassen, z. B. Industriezone, Papierfabrik, Tierkörperverwertung etc.

Fig. 14 zeigt beispielhaft einen möglichen Mechanismus der prädiktiven KI-gestützten Umluftsteuerung am Beispiel kartografierter Schadstoffquellen.

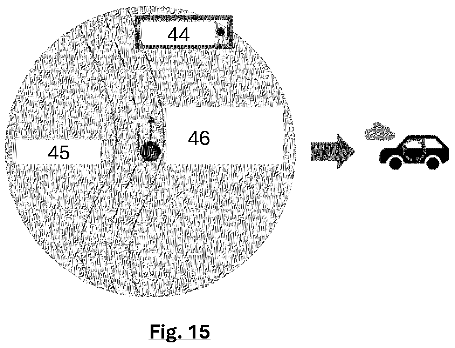

Sollte es in einer Pufferzone, in der sich das Fahrzeug in einem definierten Abstand befindet, eine Überschneidung mit einem Kartenattribut geben, wird im Pufferradius ein Schließbefehl an die Umluftklappensteuerung 1 bzw. den ECC übermittelt und die Umluftklappe wird geschlossen, bevor man zu dem betreffenden Ort kommt (Fig. 15).

Fig. 15 zeigt beispielhaft einen möglichen Mechanismus der prädiktiven KI-gestützten Umluftsteuerung im Detail.

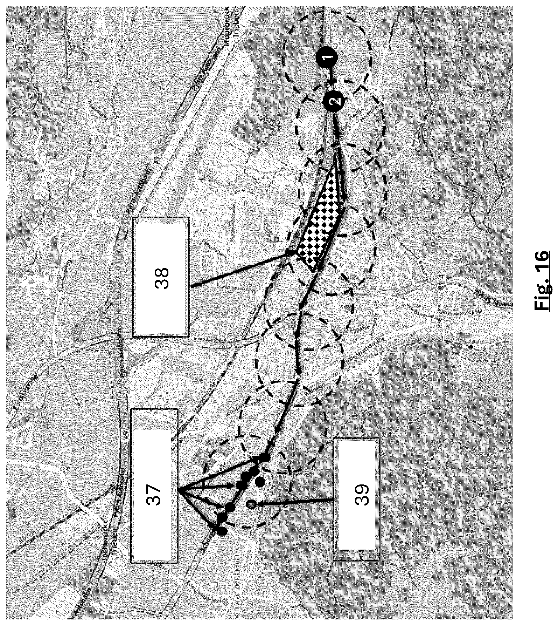

Weiters werden für eine präzise Regelung Flottendaten herangezogen und im Backend von der KI verarbeitet. Dabei werden im Backend die GPS-Positionen von manuell eingebrachten Umluftbefehlen von Flottenfahrzeugen an das Fahrzeug hinterlegt, wie im Modul Andere Internet- oder Serverbasierte Informationen 22 (Block Other available internet / OEMbackend information) der Fig. 1 erwähnt wird. Anhand der Häufungen von den Umluftbefehlen können Regionen, die nicht durch Kartendaten eindeutig als Umluftzonen identifiziert sind, als solche erschlossen werden, und wiederum können Zonen - z. B. eine stillgelegte Industrie, die allerdings als solche noch auf der Karte vermerkt ist - als Umluftzone ausgeschlossen werden (Fig. 16). Ebenfalls werden aus dem Block Andere Internet- oder Serverbasierte Informationen 22 der Fig. 1 weitere umluftrelevante Informationen auf der Karte lokalisiert, um spezifische Ereignisse, wie z. B. Waldbrände, Chemieunfälle, Unfälle mit gefährlichen oder schädlichen Gütern oder auch Smog-Warnungen, entsprechend in der Umluftsteuerung berücksichtigen zu können. Das Modul kann auch Informationen aus einem Flottenmanagement beispielsweise über manuelle Betätigungen der Umluftklappe enthalten.

Fig. 16 zeigt beispielhaft eine mögliche Einbindung von Flottendaten zur Umluftsteuerung.

Nachdem das betreffende Attribut die Pufferzone verlassen hat und nicht mehr im Radius der Fahrzeugposition TBOX_GPSLati und TBOX_GPSLongi ist, wird der Schließbefehl an die Umluftklappe wieder aufgehoben.

Die Blöcke bzw. Module Manuelle Eingaben / Fahrer Eingaben 23 (Manual / driver inputs) und HVAC-bezogene Anforderungen 24 (HVAC-related requirements) in Fig. 1 sind eng miteinander verwandt, da ein manueller Umluftbefehl der Passagiere bevorzugt ebenso miteinbezogen wird, wie eine ideale Stellung der Klappe für ein möglichst schnelles Aufheizen bzw. Abkühlen des Innenraums unter Berücksichtigung von etwaigem Scheibenbeschlag während des Heizens.

Das Modul Manuelle Eingaben / Fahrer Eingaben 23 umfasst bevorzugt: eine Scheibenwaschanforderung, Manuelle Rezirkulationsanforderung, Autowaschmodus, Entfeuchtungsanforderung etc.

Das Modul HVAC-bezogene Anforderungen 24 umfasst bevorzugt Heizung oder Kühlung der Kabine, Enteisen oder Abtauen der Scheiben etc.

### Umluftsteuerung basierend auf der CO2-Innenraumkonzentration

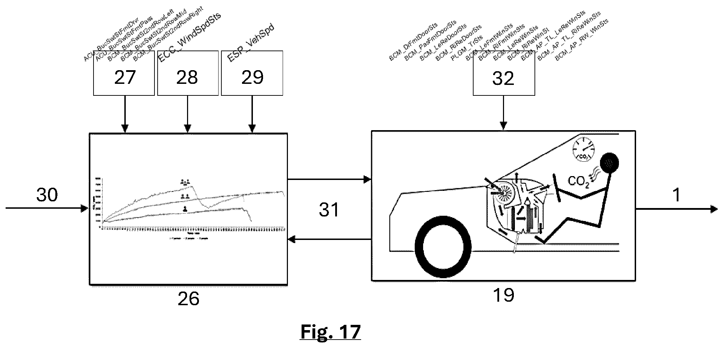

Neben der bisher geschilderten proaktiven Detektion umliegender Schadstoffquellen im Straßenbetrieb ist das CO2-Management, bevorzugt durch das Kohlendioxidkonzentrations-Simulationsmodul 19 und besonders bevorzugt unter Verwendung von CO2-Kalibrationskurven 26 - ein weiterer zentraler Aspekt in Fig. 1 - innerhalb des Blocks Innenluft-Qualitätsüberwachungsmodul 4. Zur Regelung des CO2-Gehalts im Fahrgastraum wird eine Methode vorgeschlagen, die auf den Einsatz eines CO2-Sensors und die damit verbundenen Kosten sowie die dafür erforderliche Systemintegration verzichtet. Stattdessen wird die CO2-Konzentration simuliert. Dazu wird die entsprechende CO2-Kalibrationskurve 26 ausgewählt, die bevorzugt von den vier relevanten Parametern Fahrzeugbesatzung 27, Lüftergeschwindigkeit 28, Fahrzeuggeschwindigkeit 29 und Position der Umluftklappe 30 abhängt, wie durch die entsprechenden Blöcke in Fig. 17 dargestellt wird. Zur Verdeutlichung der Funktionsweise ist in Fig. 17 ein spezifischer Ausschnitt dieses Blocks aus dem Innenluft-Qualitätsüberwachungsmodul 4 in Fig. 1 dargestellt.

Fig. 17 zeigt eine schematische Darstellung zur Auswahl der CO2-Kalibrationskurven 26 und anschließenden Simulation durch ein Kohlendioxidkonzentrations-Simulationsmodul 19 in der Fahrzeugkabine.

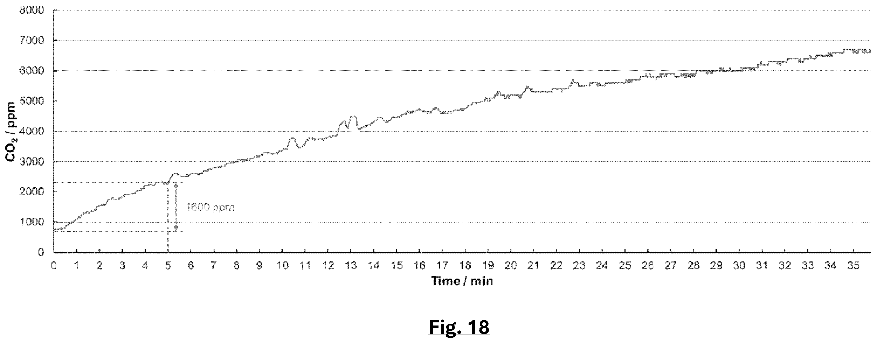

Unter einer CO2-Kalibrationskurve wird der zeitliche Verlauf des CO2-Gehalts verstanden, der unter definierten Szenarien aufgenommen wird. Ein mögliches Szenario könnte beispielsweise durch drei Personen im Fahrzeug, eine niedrige Lüftergeschwindigkeit, Fahrzeuggeschwindigkeit v typisch für Ortsbereiche und eine geschlossene Umluftklappe repräsentiert werden. In diesem Fall könnte der CO2-Gehalt beispielsweise innerhalb der ersten 5 min um 1600 ppm ansteigen, wie in Fig. 18 zu sehen ist.

Fig. 18 zeigt einen zeitlichen Verlauf der CO2-Konzentration in einer Fahrzeugkabine als Beispiel für eine CO2-Kalibrationskurve, gemessen bei drei Passagieren, niedriger Lüftergeschwindigkeit, Fahrzeuggeschwindigkeiten v im Ortsbereich und geschlossener Umluftklappe.

Die Auswahl der passenden CO2-Kalibrationskurve ist entscheidend, um den CO2-Verlauf im Innenraum präzise abzubilden. Je mehr Personen sich im Fahrzeug befinden, desto schneller nimmt der CO2-Gehalt in der Fahrzeugkabine durch Ausatmen der Passagiere zu. Ebenso führt eine geringe Lüftergeschwindigkeit der Klimaanlage zu einem vergleichsweise raschen Anstieg der CO2-Konzentration. Außerdem ist die Luftaustauschrate bei niedrigen Fahrzeuggeschwindigkeiten v gering, was für eine schnelle Zunahme des CO2-Gehalts in der Kabine verantwortlich ist. Schließlich sorgt eine geschlossene Klappe für einen schnellen Anstieg der CO2-Konzentration. Umgekehrt bewirkt eine geöffnete Klappe eine langsamere Zunahme, da die Innenraumluft kontinuierlich mit der Außenluft vermischt wird.

Diese Einflussfaktoren werden in der CO2-Kalibrationskurve 26 berücksichtigt, die anschließend für die Simulation 19 genutzt wird. Von der für das jeweils vorherrschende Szenario - abhängig von den zuvor erläuterten Einflussgrößen - zutreffenden CO2-Kalibrationskurve wird der Anstieg des CO2-Gehalts in der Fahrzeugkabine abgebildet (Block CO2-Kalibrationskurve 26 in Fig. 17) und der Innenraum mit frischer Außenluft in Abhängigkeit des Außenluft-Qualitätsüberwachungsmoduls 2 aus Fig. 1 gespült.

Wie bereits erwähnt, beeinflusst die Fahrzeuggeschwindigkeit v die CO2-Dynamik in der Fahrgastzelle, weshalb in der vorliegenden Erfindung ein geschwindigkeitsabhängiger CO2-Offset gemäß Tab. 2 berücksichtigt wird.

Die folgende Tabelle (Tab. 2) zeigt den Offset der CO2-Konzentration in Abhängigkeit von der Fahrzeuggeschwindigkeit v:

| **Geschwindigkeit *v* / km/h** | **CO₂-Offset / %** |
|---|---|
| 0 <*v* ≤ 60 | 0 |
| 60 < *v ≤* 90 | 3 |
| v > 90 | 6 |

Der Anstieg der CO2-Konzentration erfolgt bei Geschwindigkeiten v repräsentativ für Ortsgebiete, also bis v = 60 km/h, dem tatsächlich gemessenen Verlauf entsprechend der jeweiligen Kalibrationskurve - es wird somit kein Offset (0 %) verwendet, wie Tab. 2 entnommen werden kann. Je schneller das Fahrzeug betrieben wird, desto flacher wird die CO2-Zunahme (steigender Offset).

Die rechnerisch ermittelte momentane CO2-Konzentration im Fahrgastraum berücksichtigt zudem den Zustand der Fahrzeugtüren und - scheiben, wie am Block Türen und Fenster in Fig. 17 erkennbar ist, indem beim Öffnen der Anstieg des CO2-Gehalts durch den Eintrag von Außenluft in die Fahrzeugkabine unterbrochen wird. Folglich stellt eine weitere Funktion den CO2-Abbau dar. Die berechnete CO2-Konzentration wird im Folgenden an den ECC zur Ansteuerung der Umluftklappe weitergegeben.

Diese Simulation des CO2-Gehalts ist essenziell für dessen Regelung, um im Fahrgastraum ein angenehmes und behagliches Raumklima zu gewähren. Des Weiteren sorgt ein kontrolliertes CO2-Level für Sicherheit im Straßenbetrieb, um den Fahrer vor verminderter Konzentrationsfähigkeit und Müdigkeit durch erhöhte CO2-Konzentrationen zu bewahren.

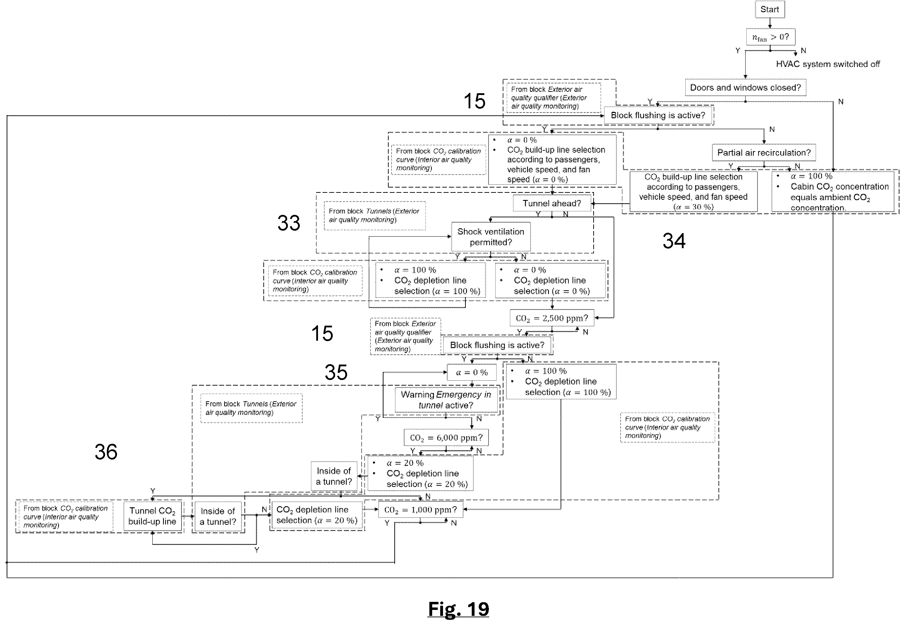

Ergänzend wird ein möglicher Regelungsablauf des Innenluft-Qualitätsüberwachungsmoduls 4 (Interior air quality monitoring) Flowchart auf Fig. 19 beschrieben.

Zu Beginn der CO2-Regelung wird abgefragt, ob die Klimaanlage eingeschaltet ist (n_fan>0). Eine ausgeschaltete Klimaanlage bedeutet gleichzeitig ein inaktives Regelungsmodell der Luftqualität, da die Umluftklappe nicht angesteuert werden kann. Bei eingeschalteter Klimaanlage und geschlossenen Fahrzeugtüren sowie -fenstern wird der Block Außenluft-Qualifizierungsmodul 3 (Exterior air quality qualifier) im Außenluft-Qualitätsüberwachungsmodul 2 (Exterior air quality monitoring) gefragt, ob verhindert werden soll, dass die Klappe geöffnet wird (Verhinderung einer Umluftklappenöffnung 15, Block flushing active?). Falls nicht alle Türen und Fenster geschlossen sind, wird als Kabinenkonzentration die CO2-Umgebungskonzentration (ca. 400 ppm) angenommen.

Ist der Befehl Block flushing aktiv, wird die Klappe geschlossen (*α*=0 %) und die entsprechende CO2-Kalibrationskurve, abhängig von der Anzahl an Passagieren, der Fahrzeuggeschwindigkeit und der Lüfterstufe, wird im Block CO2-Kalibrationskurven 26 (CO2 calibration curve) (Datenbank) im Innenluft-Qualitätsüberwachungsmodul 4 ausgewählt. Ist Block flushing inaktiv, wird abgefragt, ob die übergeordnete HVAC-Regelung einen Betrieb in Teilumluft (*α*=30 %) oder Außenluft (*α*=100 %) vorgibt. Während bei Außenluft (*α*=100 %) CO2-Umgebungskonzentration in der Kabine herrscht, wird bei Teilumluft - wie im Fall von Umluft (*α*=0 %) - die entsprechende CO2-Kalibrationskurve ausgewählt. Diese Kurve wird der Simulation Block Kohlendioxidkonzentrations-Simulationsmodul 19 (CO2 concentration simulation) weitergegeben.

Um eine ausgeglichene CO2-Innenraumkonzentration zu gewähren, wird vor Tunnelfahrten (Tunnel ahead?) eine Stoßlüftung der Fahrzeugkabine durch vollständiges Öffnen der Umluftklappe (*α*=100 %) angestrebt. Eine Stoßlüftung wird nur dann zugelassen (Shock ventilation permitted?), wenn sich das Fahrzeug mehr als 60 m vor einem Tunnel befindet, schneller als 80 km/h fährt und kein Fahrzeug mit erhöhten Emissionen voraus fährt, wie im Subsystem Tunnels, Fahrszenario: Tunnelbauwerk 5 des Außenluft-Qualitätsüberwachungsmoduls 2 erläutert.

Sobald eine berechnete CO2-Konzentration von 2 500 ppm festgestellt wird, erfolgt erneut die Abfrage, ob die Klappe geschlossen bleiben soll (Block flushing active?).

Ist ein Öffnen wegen schlechter Luftqualität nicht gestattet, wird ab einer erweiterten CO2-Konzentration von 6 000 ppm die Klappe etwas geöffnet (*α*=20 %) und die zugehörige CO2-Abbaukurve wird aus der Datenbank 26 an die Simulation übergeben. Während dem Entweichen von CO2 aus der Kabine wird kontinuierlich abgefragt, ob sich das Fahrzeug in einem Tunnel befindet, da in diesem Fall ein Aufbau durch die erhöhte CO2-Konzentration im Tunnel berücksichtigt werden muss. Die Klappe bleibt solange geöffnet, bis die CO2-Konzentration die Untergrenze von 1 000 ppm erreicht hat, ab dieser sie geschlossen wird und die Abfrage von vorne beginnt.

### Bezugszeichenliste

- 1: Umluftklappensteuerung
- 2: Außenluft-Qualitätsüberwachungsmodul
- 3: Außenluft-Qualifizierungsmodul
- 4: Innenluft-Qualitätsüberwachungsmodul
- 5: Fahrszenario: Tunnelbauwerk
- 6: Fahrszenario: Unterführung
- 7: Fahrszenario: Baustellenbereich
- 8: Fahrszenario: Verkehrsstau
- 9: Fahrszenario: Mautstelle und/oder Auffahrt von Autobahn und/oder Abfahrt von Autobahn
- 10: Fahrszenario: Objekterkennung, insbesondere eines Lastkraftwagens und/oder eines Motorrads
- 11: Fahrszenario: Ampelanlage und/oder Kreuzungsbereich
- 12: Fahrszenario: Kreisverkehr
- 13: Fahrszenario: Tiefgarage
- 14: Bedingungsdaten
- 15: Verhinderung einer Umluftklappenöffnung (Block flushing)
- 16: Bestätigung einer Umluftklappenöffnung (Activation approval)
- 17: Luftqualitätsbewertung
- 18: Kohlendioxidkonzentration
- 19: Kohlendioxidkonzentrations-Simulationsmodul
- 20: Allgemeine Umweltbedingungen
- 21: Kartendaten und/oder Navigationsdaten
- 22: Internet- oder Serverbasierte Informationen
- 23: Manuelle Eingaben / Fahrer Eingaben
- 24: HVAC-bezogene Anforderungen
- 25: Teilumluft
- 26: CO2-Kalibrationskurven
- 27: Fahrzeugbesatzung
- 28: Lüftergeschwindigkeit
- 29: Fahrzeuggeschwindigkeit
- 30: Position der Umluftklappe
- 31: Parameteraustausch
- 32: Türen und Fenster
- 33: Stoßlüftung
- 34: Teilumluft-Vorgabe
- 35: Tunnel-Notfall
- 36: Öffnen im Tunnel
- 37: Katalogisierte manuelle Umluftbefehle
- 38: Stillgelegte Industrie
- 39: Nicht katalogisierte Verbrennungsanlage
- 40: Stahlwerk
- 41: Kläranlage
- 42: Tierkörperverwertung
- 43: Kläranlage
- 44: Papierfabrik
- 45: Pufferzone
- 46: GPS Position und Fahrtrichtung

## Patentansprüche

1. Verfahren zur Luftgüteregelung in einem Innenraum eines Kraftfahrzeugs, wobei durch eine Umluftklappensteuerung (1) des Kraftfahrzeugs zumindest eine Umluftklappe wahlweise öffenbar und schließbar ist,
**dadurch gekennzeichnet , dass** ein Außenluft-Qualitätsüberwachungsmodul (2) dazu eingerichtet ist, auf Basis von Umwelt- und/oder Fahrzeugdaten das Vorliegen zumindest eines von mehreren vordefinierten unterschiedlichen Fahrszenarien (5 - 13) zu erkennen, wobei ein Außenluft-Qualifizierungsmodul (3) dazu eingerichtet ist, für das erkannte vorliegende mindestens eine Fahrszenario (5 - 13) den Einfluss auf die Luftgüte im Außenraum des Kraftfahrzeugs zu bewerten, wobei ein Innenluft-Qualitätsüberwachungsmodul (4) abhängig vom Ergebnis des Außenluft-Qualifizierungsmoduls (3) der Umluftklappensteuerung (1) des Kraftfahrzeugs Bedingungsdaten (14) zur Verfügung stellt, beispielsweise eine Verhinderung (15) einer Umluftklappenöffnung und/oder eine Bestätigung (16) einer Umluftklappenöffnung und/oder eine Luftqualitätsbewertung (17), so dass die Umluftklappensteuerung (1) abhängig von den Bedingungsdaten (14) einen Befehl zum Öffnen oder Schließen der Umluftklappe sendet oder nicht sendet.

2. Verfahren nach Anspruch 1,
**dadurch gekennzeichnet , dass** das Au-βenluft-Qualitätsüberwachungsmodul dazu eingerichtet ist, auf Basis von Umwelt- und/oder Fahrzeugdaten mittels KI-Software das Vorliegen zumindest eines von mehreren vordefinierten unterschiedlichen Fahrszenarien zu erkennen und/oder dass das Außenluft-Qualifizierungsmodul dazu eingerichtet ist, für das erkannte vorliegende mindestens eine Fahrszenario mittels KI-Software den Einfluss auf die Luftgüte im Außenraum des Kraftfahrzeugs zu bewerten.

3. Verfahren nach zumindest einem der vorhergehenden Ansprüche, **dadurch gekennzeichnet , dass** die vordefinierten unterschiedlichen Fahrszenarien, die von dem Außenluft-Qualitätsüberwachungsmodul auf Basis von Umwelt- und/oder Fahrzeugdaten erkannt werden können, umfassen: Tunnelbauwerke und/oder Unterführungen und/oder Baustellenbereiche und/oder Verkehrsstau und/oder Mautstellen und/oder Auffahrten von Autobahnen und/oder Abfahrten von Autobahnen und/oder Objekterkennung, insbesondere von Lastkraftwagen und/oder von Motorrädern und/oder Ampelanlagen und/oder Kreuzungsbereiche und/oder Kreisverkehre und/oder Tiefgaragen.

4. Verfahren nach zumindest einem der vorhergehenden Ansprüche, **dadurch gekennzeichnet , dass** das Innenluft-Qualitätsüberwachungsmodul (4) ein Kohlendioxidkonzentrations-Simulationsmodul (19) umfasst und das Ergebnis des Außenluft-Qualifizierungsmoduls (3) an die Umluftklappensteuerung (1) des Kraftfahrzeugs übergeben wird, so dass die Bedingungsdaten (14) der Umluftklappensteuerung (1) des Kraftfahrzeugs zur Verfügung gestellt werden, wobei durch das Kohlendioxidkonzentrations-Simulationsmodul (19) bevorzugt auch eine Kohlendioxidkonzentration (18) der Umluftklappensteuerung (1) zur Verfügung gestellt wird.

5. Verfahren nach zumindest einem der vorhergehenden Ansprüche, **dadurch gekennzeichnet , dass** das Au-βenluft-Qualifizierungsmodul dazu eingerichtet ist, zusätzlich zum Einfluss des erkannten vorliegenden mindestens einen Fahrszenarios, den Einfluss von allgemeinen Umweltbedingungen auf die Luftgüte im Außenraum des Kraftfahrzeugs zu bewerten.

6. Verfahren nach Anspruch 5,
**dadurch gekennzeichnet , dass** das Au-βenluft-Qualifizierungsmodul dazu eingerichtet ist, den Einfluss von allgemeinen Umweltbedingungen auf die Luftgüte im Außenraum des Kraftfahrzeugs mittels KI-Software zu bewerten.

7. Verfahren nach zumindest einem der vorhergehenden Ansprüche, **dadurch gekennzeichnet , dass** das Innenluft-Qualitätsüberwachungsmodul ein Teilumluftbetriebsmodul umfasst, zur Steuerung eines Teilumluftbetriebs des Kraftfahrzeus mit teilweise offener und teilweise geschlossener Umluftklappe, wobei die Bedingungsdaten, abhängig vom Ergebnis des Außenluft-Qualifizierungsmoduls, zumindest teilweise durch das Teilumluftbetriebsmodul der Umluftklappensteuerung zur Verfügung gestellt werden.

8. Verfahren nach zumindest einem der vorhergehenden Ansprüche, **dadurch gekennzeichnet , dass** das Au-βenluft-Qualitätsüberwachungsmodul dazu eingerichtet ist, zusätzlich zur Berücksichtigung zumindest eines von mehreren vordefinierten unterschiedlichen Fahrszenarien, zusätzliche Luftqualitätsressourcen im Internet und/oder auf zumindest einem Kraftfahrzeug-externen Server auszuwerten, so dass die Bedingungsdaten abhängig vom Ergebnis der zusätzlichen Luftqualitätsressourcen im Internet und/oder von zumindest einem Kraftfahrzeug-externen Server zur Verfügung gestellt werden.

9. Verfahren nach zumindest einem der vorhergehenden Ansprüche, **dadurch gekennzeichnet , dass** das Außenluft-Qualitätsüberwachungsmodul dazu eingerichtet ist, zusätzlich Navigationsdaten auszuwerten, so dass die Bedingungsdaten abhängig vom Ergebnis der Navigationsdaten zur Verfügung gestellt werden.

10. Verfahren nach zumindest einem der vorhergehenden Ansprüche, **dadurch gekennzeichnet , dass** das Außenluft-Qualitätsüberwachungsmodul dazu eingerichtet ist, zusätzlich Benutzereingaben auszuwerten, so dass die Bedingungsdaten abhängig vom Ergebnis der Benutzereingaben zur Verfügung gestellt werden.

11. Verfahren nach zumindest einem der vorhergehenden Ansprüche, **dadurch gekennzeichnet , dass** das Innenluft-Qualitätsüberwachungsmodul ein Kohlendioxidsimulationsmodul umfasst, so dass das Innenluft-Qualitätsüberwachungsmodul abhängig vom Ergebnis des Außenluft-Qualifizierungsmoduls und vom Ergebnis des Kohlendioxidsimulationsmoduls der Umluftklappensteuerung des Kraftfahrzeugs Bedingungsdaten zur Verfügung stellt.

12. Kraftfahrzeug umfassend eine oder mehrere Steuereinheiten, wobei die eine oder die mehreren Steuereinheiten dazu eingerichtet sind, ein Verfahren nach zumindest einem der vorhergehenden Ansprüche auszuführen, so dass durch eine Umluftklappensteuerung des Kraftfahrzeugs zumindest eine Umluftklappe des Kraftfahrzeugs wahlweise öffenbar und schließbar, bevorzugt auch teilweise öffenbar, ist.
